(19) Europäisches Patentamt
European Patent Office
Office européen des brevets

(11) **EP 4 598 201 A1**

(12) **EUROPEAN PATENT APPLICATION**
published in accordance with Art. 153(4) EPC

(43) Date of publication:
**06.08.2025  Bulletin 2025/32**

(21) Application number: **23878887.1**

(22) Date of filing: **15.09.2023**

(51) International Patent Classification (IPC):
**H04W 72/12** (2023.01)

(52) Cooperative Patent Classification (CPC):
**H04B 1/7163; H04W 72/12**

(86) International application number:
**PCT/CN2023/119113**

(87) International publication number:
**WO 2024/082893 (25.04.2024 Gazette 2024/17)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:  **18.10.2022  CN 202211275259**

(71) Applicant: **Huawei Technologies Co., Ltd.
Shenzhen, Guangdong 518129 (CN)**

(72) Inventors:
• **WU, Kuan
  Shenzhen, Guangdong 518129 (CN)**
• **HUANG, Lei
  Shenzhen, Guangdong 518129 (CN)**
• **QIAN, Bin
  Shenzhen, Guangdong 518129 (CN)**
• **YANG, Xun
  Shenzhen, Guangdong 518129 (CN)**

(74) Representative: **Körber, Martin Hans
  Mitscherlich PartmbB
  Patent- und Rechtsanwälte
  Karlstraße 7
  80333 München (DE)**

(54) **SCHEDULING METHOD FOR UWB, AND RELATED PRODUCT**

(57)    This application discloses a scheduling method for a UWB and a related product. This application may be applied to a UWB-based wireless personal area network system, a sensing system, a positioning system, a ranging system, or a communication system, and may be further applied to a wireless local area network system that supports 802.11 series protocols such as a next-generation Wi-Fi protocol of IEEE802.11ax, for example, 802.11be or Wi-Fi 7, and a next-generation protocol of 802.11be, for example, Wi-Fi 8. The method includes: generating scheduling information, where the scheduling information includes a first field and a second field, the first field indicates a time unit for transmitting a UWB signal in a $1^{st}$ period in which a UWB device transmits the UWB signal, and the second field indicates a scheduling period in which the UWB device transmits the UWB signal; and sending the scheduling information. The UWB signal is periodically transmitted, so that signaling overheads can be reduced.

FIG. 6

## Description

This application claims priority to Chinese Patent Application No. 202211275259.8, filed with the China National Intellectual Property Administration on October 18, 2022 and entitled "SCHEDULING METHOD FOR UWB AND RELATED PRODUCT", which is incorporated herein by reference in its entirety.

## TECHNICAL FIELD

This application relates to the communication field, and in particular, to a scheduling method for a UWB and a related product.

## BACKGROUND

An ultra-wideband (ultra-wideband, UWB) technology is a wireless communication and sensing/ranging technology that transmits a signal by using a nanosecond-level non-sine narrow impulse, and therefore occupies a wide spectral range. Because of its narrow impulse and extremely low radiation spectral density, a UWB system has advantages such as a strong multipath resolution capability, low power consumption, and high confidentiality, and has attracted wide attention in the industry.

Since the Federal Communications Commission approved entry of the UWB technology into the civil field in 2002, many world-renowned large companies, research institutes, and standardization organizations have been actively engaged in research, development, and standardization of ultra-wideband wireless communication technologies. The Institute of Electrical and Electronics Engineers (Institute of Electrical and Electronics Engineers, IEEE) has incorporated the UWB technology into IEEE 802 series wireless standards, and has released a UWB technology-based wireless personal area network (wireless personal area network, WPAN) standard IEEE 802.15.4a and its evolved version IEEE 802.15.4z. Currently, formulation of a next-generation UWB WPAN standard IEEE 802.15.4ab is put on the agenda. A UWB is planned to be comprehensively upgraded in the IEEE 802.15.4ab standard.

Scheduling information for UWB applications (for example, ranging, sensing, positioning, and communication) is used to schedule one or more UWB devices to implement the UWB applications. Currently, an existing UWB scheduling solution usually has a problem of high signaling overheads. Therefore, a UWB scheduling solution that can reduce signaling overheads needs to be studied.

## SUMMARY

Embodiments of this application disclose a scheduling method for a UWB, to reduce signaling overheads.

According to a first aspect, an embodiment of this application provides a scheduling method for a UWB. The method includes: generating scheduling information, where the scheduling information includes a first field and a second field, the first field indicates a time unit in which a UWB device transmits a UWB signal, and the second field indicates a scheduling period in which the UWB device transmits the UWB signal; and sending the scheduling information. Optionally, the first field indicates a time unit for transmitting the UWB signal in a $1^{st}$ scheduling period of the UWB device.

In this embodiment of this application, the first field indicates the time unit in which the UWB device transmits the UWB signal, and the second field indicates the scheduling period in which the UWB device transmits the UWB signal. Both the first field and the second field can be used to indicate a plurality of time units allocated to the UWB device for transmitting the UWB signal, so that fewer bits are occupied. This can reduce signaling overheads.

In a possible implementation, the scheduling information further includes a third field, and the third field indicates a quantity of repetitions of transmitting the UWB signal by the UWB device.

In this implementation, the third field included in the scheduling information indicates the quantity of repetitions of transmitting the UWB signal by the UWB device, so that the quantity of repetitions of transmitting the UWB signal by the UWB device can be flexibly indicated.

In a possible implementation, the scheduling information implicitly (or non-explicitly) indicates a quantity of repetitions of transmitting the UWB signal by the UWB device. For example, any scheduling information considers by default that the quantity of repetitions of transmitting the UWB signal by the UWB device is 16, and the scheduling information does not need to indicate, by using carried information, the quantity of repetitions of transmitting the UWB signal by the UWB device. In other words, the UWB device can learn of the quantity of repetitions of transmitting the UWB signal without using the scheduling information. For example, the quantity of repetitions of transmitting the UWB signal is preconfigured for the UWB device.

In this implementation, the scheduling information implicitly (or non-explicitly) indicates the quantity of repetitions of transmitting the UWB signal by the UWB device, so that the occupied bits can be reduced.

In a possible implementation, the scheduling information further includes a fourth field, and the fourth field indicates the UWB device to periodically transmit the UWB signal.

In this implementation, the fourth field indicates the UWB device to periodically transmit the UWB signal, so that the UWB device can periodically transmit the UWB signal. This further reduces the signaling overheads.

In a possible implementation, the scheduling information further includes an address of the UWB device, and a length of the address of the UWB device is 2 bytes or 8 bytes.

In this implementation, the scheduling information further includes the address of the UWB device, so that the UWB device learns of a time unit to be occupied by the UWB device to transmit the UWB signal.

In a possible implementation, the time unit is a time unit for transmitting the UWB signal in a $1^{st}$ scheduling period.

In this implementation, the time unit indicated by the first field is the time unit for transmitting the UWB signal in the $1^{st}$ scheduling period. Both the first field and the second field can be used to determine a time unit for transmitting the UWB signal in each scheduling period. This can reduce signaling overheads.

In a possible implementation, the first field is a time unit bitmap, the time unit bitmap indicates whether a time unit is used by the UWB device to transmit the UWB signal, the scheduling information further includes a bitmap offset, the bitmap offset is used to determine a start time unit that is in one measurement period and in which the UWB device transmits the UWB signal, and a time unit corresponding to a $1^{st}$ bit of the time unit bitmap is the start time unit. For example, measurement may be one or more tasks of ranging, sensing, positioning, or a communication task. Optionally, the measurement period is a ranging round. It should be noted that the measurement period is a longer period than the scheduling period, and the measurement period is a time period for completing one or more measurement tasks. The measurement period is an entire period for completing a ranging, sensing, or positioning task. The scheduling period is a period in which the UWB device transmits the UWB signal in one measurement period or communication period. For example, one measurement period includes eight scheduling periods of the UWB device, and the UWB device transmits the UWB signal in a $3^{rd}$ time unit and a $5^{th}$ time unit in each scheduling period, and does not transmit the UWB signal in another time unit. The measurement period may include a control phase, a measurement phase, and a report phase.

In this implementation, the bitmap offset determines the start time unit that is in the one measurement period and in which the UWB device transmits the UWB signal, that is, the time unit corresponding to the $1^{st}$ bit of the time unit bitmap. The bitmap offset and the time unit bitmap allow the time unit for transmitting the UWB signal in the $1^{st}$ scheduling period to be accurate, so that a length of the time unit bitmap can be reduced. This further reduces the signaling overheads.

In a possible implementation, the scheduling information further includes a field indicating a length of the time unit bitmap.

In this implementation, the scheduling information further includes the field indicating the length of the time unit bitmap, so that the length of the time unit bitmap can be accurately determined, and a time unit corresponding to each bit in the time unit bitmap can be determined.

In a possible implementation, a value of the bitmap offset is a quantity of time units before the start time unit in the one measurement period.

In this implementation, the value of the bitmap offset is the quantity of time units before the start time unit in the one measurement period, so that the UWB device quickly and accurately determines, by using the value, the start time unit for transmitting the UWB signal.

In a possible implementation, the first field is a time unit bitmap, the time unit bitmap indicates whether a time unit is used by the UWB device to transmit the UWB signal, the scheduling information further includes a bitmap offset, the bitmap offset is used to determine a start time unit that is in one communication period and in which the UWB device transmits the UWB signal, and a time unit corresponding to a $1^{st}$ bit of the time unit bitmap is the start time unit.

In this implementation, the bitmap offset determines the start time unit that is in the one communication period and in which the UWB device transmits the UWB signal, that is, the time unit corresponding to the $1^{st}$ bit of the time unit bitmap. The bitmap offset and the time unit bitmap allow the time unit for transmitting the UWB signal in the $1^{st}$ scheduling period to be accurate, so that a length of the time unit bitmap can be reduced. This further reduces the signaling overheads. The scheduling period is a period in which the UWB device transmits the UWB signal in one measurement period or communication period. The communication period is a time period for completing one or more communication tasks. The scheduling period is a period in which the UWB device transmits the UWB signal in one communication period. For example, one communication period includes eight scheduling periods of the UWB device, and the UWB transmits the UWB signal in a $3^{rd}$ time unit and a $5^{th}$ time unit in each scheduling period, and does not transmit the UWB signal in another time unit.

In a possible implementation, a value of the bitmap offset is a quantity of time units before the start time unit in the one communication period.

In this implementation, the value of the bitmap offset is the quantity of time units before the start time unit in the one communication period, so that the UWB device quickly and accurately determines, by using the value, the start time unit for transmitting the UWB signal.

In a possible implementation, the time unit bitmap includes K bits, K is an integer greater than 0, and when one of the K bits is set to a specified value, the specified value indicates that a time unit corresponding to the bit is used by the UWB device to transmit the UWB signal.

In this implementation, whether each time unit is used by the UWB device to transmit the UWB signal can be accurately indicated.

In a possible implementation, the scheduling information further includes a fifth field, the fifth field indicates an address type of the UWB device, and the address type of the UWB device includes a short address and an extended address.

In this implementation, the fifth field indicates the address type of the UWB device, to be applicable to UWB devices of different address types.

In a possible implementation, the scheduling information further includes a sixth field and a scheduling list, the sixth field indicates a quantity of list elements in the scheduling list, one list element in the scheduling list is used to schedule one UWB device, and the first field and the second field correspond to one list element in the scheduling list.

In this implementation, the quantity of list elements in the scheduling list can be accurately indicated.

In a possible implementation, the time unit is any one of the following: a slot (for example, a ranging slot), a ranging scheduling time unit (ranging scheduling time unit, RSTU), or a sensing scheduling time unit (sensing scheduling time unit, SSTU). The time unit may alternatively be another time length. The sensing scheduling time unit is a time unit that can be used to determine duration of a sensing block, a sensing round, and a sensing slot.

In this implementation, the time unit may be flexibly configured based on an actual application scenario.

In a possible implementation, the method is applied to a ranging, sensing, or positioning scenario.

In this implementation, in a ranging, sensing, or positioning scenario in which a UWB is applied, the signaling overheads can be reduced by performing the scheduling method according to the first aspect.

In a possible implementation, the method is applied to an application scenario with a repetition period transmission structure, for example, a narrow-band assisted multi-millisecond (narrow-band assisted multi-millisecond, NBA-MMS)-based ranging scenario, an uplink time difference of arrival (uplink time difference of arrival, UL-TDOA)-based positioning scenario, and a downlink time difference of arrival (downlink time difference of arrival, DL-TDOA)-based positioning and sensing scenario.

In this implementation, the method is applied to the application scenario with the repetition period transmission structure. This can effectively reduce signaling overheads.

According to a second aspect, an embodiment of this application provides another scheduling method for a UWB. The method includes: receiving first scheduling information, where the first scheduling information includes a first field and a second field, the first field indicates a time unit in which a UWB device transmits a UWB signal, and the second field indicates a scheduling period in which the UWB device transmits the UWB signal; and transmitting the UWB signal based on the first scheduling information.

In this embodiment of this application, the first field indicates the time unit in which the UWB device transmits the UWB signal, and the second field indicates the scheduling period in which the UWB device transmits the UWB signal. Both the first field and the second field can be used to indicate a plurality of time units allocated to the UWB device for transmitting the UWB signal, so that fewer bits are occupied. This can reduce signaling overheads.

In a possible implementation, the scheduling information further includes a third field, and the third field indicates a quantity of repetitions of transmitting the UWB signal by the UWB device.

In a possible implementation, the scheduling information implicitly (or non-explicitly) indicates a quantity of repetitions of transmitting the UWB signal by the UWB device. For example, any scheduling information considers by default that the quantity of repetitions of transmitting the UWB signal by the UWB device is 16, and the scheduling information does not need to indicate, by using carried information, the quantity of repetitions of transmitting the UWB signal by the UWB device. In other words, the UWB device can learn of the quantity of repetitions of transmitting the UWB signal without using the scheduling information. For example, the quantity of repetitions of transmitting the UWB signal is preconfigured for the UWB device.

In a possible implementation, the scheduling information further includes a fourth field, and the fourth field indicates the UWB device to periodically transmit the UWB signal.

In a possible implementation, the scheduling information further includes an address of the UWB device, and a length of the address of the UWB device is 2 bytes or 8 bytes.

In a possible implementation, the time unit is a time unit for transmitting the UWB signal in a $1^{st}$ scheduling period.

In a possible implementation, the first field is a time unit bitmap, the time unit bitmap indicates whether a time unit is used by the UWB device to transmit the UWB signal, the first scheduling information further includes a bitmap offset, the bitmap offset is used to determine a start time unit that is in one measurement period and in which the UWB device transmits the UWB signal, and a time unit corresponding to a $1^{st}$ bit of the time unit bitmap is the start time unit. Optionally, the measurement period is a ranging round. It should be noted that the measurement period is a longer period than the scheduling period, and the measurement period is a time period for completing one or more measurement tasks. The measurement period is an entire period for completing a ranging, sensing, positioning, or communication task, and the scheduling period is a period of transmitting a UWB signal by a UWB device. The scheduling period is a plurality of periods in one measurement period.

In a possible implementation, the scheduling information further includes a field indicating a length of the time unit bitmap.

In a possible implementation, a value of the bitmap offset is a quantity of time units before the start time unit in the one measurement period.

In a possible implementation, the first field is a time unit bitmap, the time unit bitmap indicates whether a time unit is used by the UWB device to transmit the UWB signal, the first scheduling information further includes a bitmap offset, the bitmap offset is used to determine a start time unit that is in one communication period and in which the UWB device transmits the UWB signal, and a time unit corresponding to a 1st bit of the time unit bitmap is the start time unit.

In a possible implementation, a value of the bitmap offset is a quantity of time units before the start time unit in the one communication period.

In a possible implementation, the time unit bitmap includes K bits, K is an integer greater than 0, and when one of the K bits is set to a specified value, the specified value indicates that a time unit corresponding to the bit is used by the UWB device to transmit the UWB signal.

In a possible implementation, the scheduling information further includes a fifth field, the fifth field indicates an address type of the UWB device, and the address type of the UWB device includes a short address and an extended address.

In a possible implementation, the scheduling information further includes a sixth field and a scheduling list, the sixth field indicates a quantity of list elements in the scheduling list, one list element in the scheduling list is used to schedule one UWB device, and the first field and the second field correspond to one list element in the scheduling list.

In a possible implementation, the time unit is any one of the following: a slot (for example, a ranging slot), an RSTU, or an SSTU. The time unit may alternatively be another time length.

In a possible implementation, the method is applied to a ranging, sensing, or positioning scenario.

In a possible implementation, the method is applied to an application scenario with a repetition period transmission structure, for example, an NBA-MMS-based ranging scenario, a UL-TDOA-based positioning scenario, and a DL-TDOA-based positioning and sensing scenario.

In a possible implementation, the method further includes: receiving second scheduling information, where a format of the second scheduling information is different from a format of the first scheduling information; and the transmitting the UWB signal based on the first scheduling information includes: transmitting the UWB signal based on a sequence of receiving the first scheduling information and the second scheduling information, and the first scheduling information.

In this implementation, the UWB signal is transmitted based on the sequence of receiving the scheduling information in different formats, and one of the scheduling information. This can reduce power consumption.

For technical effect brought by the possible implementations of the first aspect, refer to the descriptions of the technical effect of the first aspect or the possible implementations of the first aspect.

According to a third aspect, an embodiment of this application provides a communication apparatus. The communication apparatus has a function of implementing behavior in the method embodiment in the first aspect. The communication apparatus may be a communication device, may be a component (for example, a processor, a chip, or a chip system) of the communication device, or may be a logical module or software that can implement all or some functions of the communication device. The function of the communication apparatus may be implemented by hardware, or may be implemented by hardware executing corresponding software. The hardware or the software includes one or more modules or units corresponding to the foregoing functions. In a possible implementation, the communication apparatus includes a transceiver module and a processing module. The processing module is configured to generate scheduling information, where the scheduling information includes a first field and a second field, the first field indicates a time unit in which a UWB device transmits a UWB signal, and the second field indicates a scheduling period in which the UWB device transmits the UWB signal; and the transceiver module is configured to send the scheduling information.

For possible implementations of the communication apparatus in the third aspect, refer to the possible implementations of the first aspect.

For technical effect brought by the possible implementations of the third aspect, refer to the descriptions of the technical effect of the first aspect or the possible implementations of the first aspect.

According to a fourth aspect, an embodiment of this application provides a communication apparatus. The communication apparatus has a function of implementing behavior in the method embodiment in the second aspect. The communication apparatus may be a communication device, may be a component (for example, a processor, a chip, or a chip system) of the communication device, or may be a logical module or software that can implement all or some functions of the communication device. The function of the communication apparatus may be implemented by hardware, or may be implemented by hardware executing corresponding software. The hardware or the software includes one or more modules or units corresponding to the foregoing functions. In a possible implementation, the communication apparatus includes a transceiver module and a processing module. The transceiver module is configured to receive first scheduling information, where the first scheduling information includes a first field and a second field, the first field indicates a time unit in which a UWB device transmits a UWB signal, and the second field indicates a scheduling period in which the UWB device transmits the UWB signal; and the processing module is configured to transmit the UWB signal based on the first scheduling information.

In a possible implementation, the transceiver module is further configured to receive second scheduling information, where a format of the second scheduling information is different from a format of the first scheduling information; and the processing module is specifically configured to transmit the UWB signal based on a sequence of receiving the first scheduling information and the second scheduling information, and the first scheduling information.

For possible implementations of the communication apparatus in the fourth aspect, refer to the possible implementations of the second aspect.

For technical effect brought by the possible implementations of the fourth aspect, refer to the descriptions of the technical effect of the second aspect or the possible implementations of the second aspect.

According to a fifth aspect, an embodiment of this application provides another communication apparatus. The communication apparatus includes a processor, the processor is coupled to a memory, and the memory is configured to store a program or instructions. When the program or the instructions are executed by the processor, the communication apparatus is enabled to perform the method according to the first aspect to the second aspect.

In this embodiment of this application, in a process of performing the method, a process of sending information (or signal) in the method may be understood as a process of outputting information based on instructions of the processor. When the information is output, the processor outputs the information to a transceiver, so that the transceiver transmits the information. After the information is output by the processor, other processing may further need to be performed on the information before the information arrives at the transceiver. Similarly, when the processor receives input information, the transceiver receives the information, and inputs the information to the processor. Further, after the transceiver receives the information, other processing may need to be performed on the information before the information is input to the processor.

An operation like sending and/or receiving related to the processor may be generally understood as an instruction output based on the processor if there is no special description, or if the operation does not conflict with an actual function or internal logic of the operation in related descriptions.

In an implementation process, the processor may be a processor specially configured to perform these methods, or may be a processor, for example, a general-purpose processor, that executes computer instructions in the memory to perform these methods. For example, the processor may be further configured to execute the program stored in the memory. When the program is executed, the communication apparatus is enabled to perform the method according to the first aspect or any possible implementation of the first aspect.

In a possible implementation, the memory is located outside the communication apparatus. In a possible implementation, the memory is located in the communication apparatus.

In a possible implementation, the processor and the memory may alternatively be integrated into one device, that is, the processor and the memory may alternatively be integrated together.

In a possible implementation, the communication apparatus further includes the transceiver. The transceiver is configured to receive or send a signal, and the like.

According to a sixth aspect, an embodiment of this application provides another communication apparatus. The communication apparatus includes a processing circuit and an interface circuit, the interface circuit is configured to obtain data or output data, and the processing circuit is configured to perform the method according to the first aspect or the second aspect.

According to a seventh aspect, an embodiment of this application provides a computer-readable storage medium. The computer-readable storage medium stores a computer program, the computer program includes program instructions, and when the program instructions are executed, a computer is enabled to perform the method according to the first aspect or the second aspect.

According to an eighth aspect, an embodiment of this application provides a computer program product. The computer program product includes a computer program, the computer program includes program instructions, and when the program instructions are executed, a computer is enabled to perform the method according to the first aspect or the second aspect.

According to a ninth aspect, an embodiment of this application provides a communication system, including the communication apparatus according to the third aspect or any possible implementation of the third aspect, and the communication apparatus according to the fourth aspect or any possible implementation of the fourth aspect.

According to a tenth aspect, an embodiment of this application provides a chip, including a processor and a communication interface. The processor reads, through the communication interface, instructions stored in a memory, to perform the method according to the first aspect or the fourth aspect.

## BRIEF DESCRIPTION OF DRAWINGS

To describe technical solutions in embodiments of this application or in the background more clearly, the following describes accompanying drawings for describing embodiments of this application or the background.

FIG. 1 is a diagram of each phase in a ranging round in the conventional technology;
FIG. 2 is a diagram of DL-TDOA positioning based on a UWB signal;
FIG. 3 is a schematic of an example of a star topology structure;
FIG. 4 is a schematic of an example of a point-to-point topology structure or a mesh topology structure;
FIG. 5 shows an example of a UWB system to which a technical solution according to an embodiment of this application is applicable;
FIG. 6 is a flowchart of a scheduling method for a UWB according to an embodiment of this application;
FIG. 7 is a flowchart of another scheduling method for a UWB according to an embodiment of this application;
FIG. 8 is a diagram of a scheduling indication in a ranging scenario according to an embodiment of this application;
FIG. 9A shows an example of a list element in scheduling information according to an embodiment of this application;
FIG. 9B shows another example of a list element in scheduling information according to an embodiment of this application;
FIG. 10 is a diagram of time units used by a UWB device 1 to transmit a UWB signal according to an embodiment of this application;
FIG. 11A is another diagram of time units used by a UWB device 1 to transmit a UWB signal according to an embodiment of this application;
FIG. 11B is another diagram of time units used by a UWB device 1 to transmit a UWB signal according to an embodiment of this application;
FIG. 12A shows another example of a list element in scheduling information according to an embodiment of this application;
FIG. 12B shows another example of a list element in scheduling information according to an embodiment of this application;
FIG. 13 shows an example in which a bitmap indicates whether a time unit is used by a UWB device to transmit a UWB signal in the conventional technology;
FIG. 14 shows an example in which a time unit bitmap indicates whether a time unit is used by a UWB device 1 to transmit a UWB signal according to an embodiment of this application;
FIG. 15 is a diagram of a time sequence of a multi-millisecond transmission ranging process according to an embodiment of this application;
FIG. 16 shows a group of typical scheduling modes in which a DL-TDOA positioning process can be completed;
FIG. 17 is a diagram of scheduling of DL-TDOA positioning that is repeated for eight times according to an embodiment of this application;
FIG. 18 is a diagram of a structure of a communication apparatus 1800 according to an embodiment of this application;
FIG. 19 is a diagram of a structure of another communication apparatus 190 according to an embodiment of this application; and
FIG. 20 is a diagram of a structure of another communication apparatus 200 according to an embodiment of this application.

## DESCRIPTION OF EMBODIMENTS

In the specification, claims, or accompanying drawings of this application, terms "first", "second", and the like are intended only to distinguish between different objects but do not describe a particular sequence. It may be understood that various numbers in embodiments of this application are merely used for distinguishing for ease of description and are not used to limit the scope of embodiments of this application. Sequence numbers of the foregoing processes do not mean execution sequences, and the execution sequences of the processes should be determined based on functions and internal logic of the processes. In addition, terms "include", "have", and any variants thereof are intended to cover non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

An "embodiment" mentioned in this specification means that a particular feature, structure, or characteristic described with reference to the embodiment may be included in at least one embodiment of this application. The phrase shown in various locations in the specification may not necessarily refer to a same embodiment, and is not an independent or optional embodiment exclusive from another embodiment. It may be understood explicitly and implicitly by a person skilled in the art that embodiments described in the specification may be combined with another embodiment.

Terms used in the following embodiments of this application are merely intended to describe specific embodiments, but are not intended to limit this application. Terms "one", "a", "the", "the foregoing", "this", and "the one" of singular forms used in this specification and the appended claims of this application are also intended to include plural forms, unless otherwise specified in the context clearly. It should also be understood that a term "and/or" used in this application means and includes any or all possible combinations of one or more listed items. For example, "A and/or B" may indicate the following three cases: Only A exists, only B exists, and both A and B exist, where A and B may be singular or plural. A term "a plurality of" used in this application means two or more. In text descriptions of this application, a character "/" usually indicates an "or" relationship between associated objects.

It may be understood that in embodiments of this application, "B corresponding to A" indicates that there is a correspondence between A and B, and B may be determined based on A. However, it should also be understood that determining (or generating) B based on (or based on) A does not mean that B is determined (or generated) based on (or based on) A only, and B may alternatively be determined (or generated) based on (or based on) A and/or other information.

For ease of understanding of solutions of this application, the following first describes terms and technical solutions in embodiments of this application.

Ranging round (ranging round), positioning round (positioning round), sensing round (sensing round), measurement period, and communication period

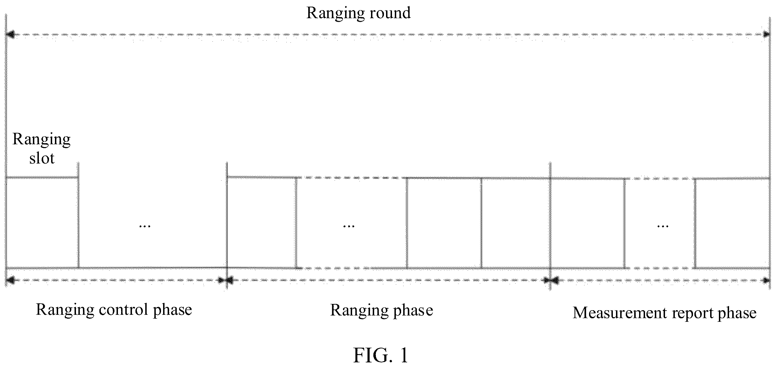

In the IEEE 802.15.4z standard, a single ranging process is defined as a ranging round (ranging round). In the IEEE 802.15.4z standard, the ranging round is defined as follows: The ranging round is a time period of sufficient duration to complete one entire ranging period involving a set of ERDEVs participating in ranging exchange (a ranging round is a period of sufficient duration to complete one entire range-measurement cycle involving the set of ERDEVs participating in the ranging exchange). A minimum processing time unit in each ranging round is a ranging slot (ranging slot). A ranging round is divided into three phases: a ranging control phase (ranging control phase), a ranging phase (ranging phase), and a measurement report phase (measurement report phase). FIG. 1 is a diagram of each phase in a ranging round in the conventional technology. Details are shown in FIG. 1. In the IEEE 802.15.4z standard, the ranging control phase includes one ranging slot. However, in the IEEE 802.15.4ab standard currently under discussion and formulation, the ranging control phase may include more than one ranging slot.

In embodiments of this application, a single positioning process, namely, a process of completing a positioning task, is defined as a positioning round. The positioning round may have another name. This is not limited in this application. The positioning round may be a period of time (or time period) sufficient to complete one entire positioning task. A meaning of the positioning round is similar to a meaning of the ranging round, and a difference lies in that one is a time period corresponding to ranging, and the other is a time period corresponding to positioning. A minimum processing time unit of each positioning round is a positioning slot (positioning slot). A positioning round may be divided into three phases: a positioning control phase (positioning control phase), a positioning phase (positioning phase), and a positioning report phase (positioning report phase).

In embodiments of this application, a single sensing process, namely, a process of completing a sensing task, is defined as a sensing round. The sensing round may have another name. This is not limited in this application. The sensing round may be a period of time (or time period) sufficient to complete one entire sensing task. A meaning of the sensing round is similar to the meaning of the ranging round, and a difference lies in that one is the time period corresponding to ranging, and the other is a time period corresponding to sensing. A minimum processing time unit of each sensing round is a sensing slot (sensing slot). A sensing round may be divided into three phases: a sensing control phase (sensing control phase), a sensing phase (sensing phase), and a sensing report phase (sensing report phase).

A measurement period is a time period in which one or more UWB devices complete one or more measurement tasks. The measurement task herein may be a ranging task, a positioning task, a sensing task, or the like. The measurement period may be the ranging round, the positioning round, or the sensing round. The communication period is a time period in which one or more UWB devices complete one or more communication tasks.

In addition, it should be further noted that names of different phases in a single measurement round (for example, the ranging round, the sensing round, or the positioning round) are merely examples, and do not constitute any limitation on the protection scope of this application. For example, the measurement control phase may be understood as a phase used to configure a parameter required in the measurement round. For another example, the measurement phase may be understood as a phase used to perform measurement. For another example, the measurement result report phase may be understood as a phase used to report the measurement result, and may also be referred to as an end of the measurement phase. In addition, it should be further noted that in embodiments of this application, a size of each field indicates a quantity of bits occupied by the field.

UWB positioning

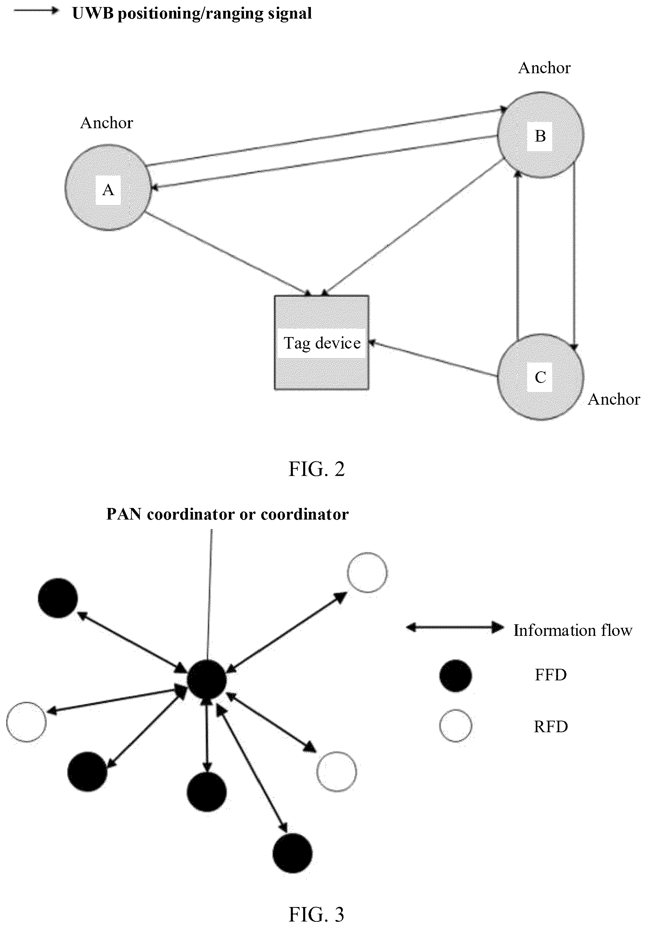

A UWB can be used for indoor positioning. A principle method of the UWB positioning includes but is not limited to UL-TDOA and DL-TDOA. FIG. 2 is a diagram of DL-TDOA positioning based on a UWB signal. The DL-TDOA positioning based on the UWB signal may be referred to as UWB DL-TDOA positioning. In FIG. 2, A, B, and C indicate anchor devices, and arrows indicate flow directions of UWB positioning/ranging signals. It can be learned from FIG. 2 that, the UWB DL-TDOA positioning is used as an example. In the method, three or more anchor devices are arranged in indoor space, and bidirectional UWB signal interaction is performed between the anchor devices to provide positioning signals for a tag device. The tag device listens to the UWB positioning/ranging interaction signals between the anchor devices, and calculates a time difference of arrival between the signals, to calculate a location of the tag device, thereby implementing a positioning function.

The following describes the conventional technology 1 and the conventional technology 2 that are related to a scheduling solution provided in embodiments of this application.

Conventional technology 1:

The conventional technology 1 provides a scheduling information element for UWB ranging, namely, a ranging device management information element (ranging device management information element, RDM IE). Table 1 shows a format of the RDM IE in the conventional technology.

Table 1

| Bits: 0 | 1 | 2-7 | Octets: variable |
|---|---|---|---|
| SIU | Address Size | RDM List Length | RDM List |

Specifically, meanings of some fields in Table 1 are as follows:
The SIU (slot index used) field indicates an access mode used in a current ranging process. If SIU is equal to 0, the current RDM IE is used to manage a ranging process based on contention access. If SIU is equal to 1, the current RDM IE is used to manage a ranging process based on scheduling access.

The address size field indicates an address type of a device participating in the ranging process. If address size is equal to 0, it indicates that addresses of all devices related to the current RDM list (list) are short addresses, that is, an address length is 2 bytes (Byte). If address size is equal to 1, it indicates that addresses of all devices related to the current RDM list are extended addresses (long addresses), that is, an address length is 8 bytes (Byte).

The RDM list length field indicates a quantity of elements in the RDM list, namely, a quantity of list elements (list element) in a format shown in Table 2. Table 2 shows the format of the list element in the RDM list in the conventional technology 1. In embodiments of this application, the list element may be referred to as a scheduling list element (scheduling list element).

The RDM list field is a list, and the format of each element in the list is shown in Table 2.

Table 2

| Bits: 0 | 1-7 | Octets: 2/8 |
|---|---|---|
| Ranging Role | Ranging Slot Index | Address |

Specifically, meanings of some fields in Table 2 are as follows:
The ranging role field indicates a ranging role of a device corresponding to the address field of the current list element. If ranging role is equal to 0, it indicates that the device is a ranging responder (responder). If ranging role is equal to 1, it indicates that the device is a ranging initiator (initiator).

The ranging slot index field indicates a subscript of a slot allocated to the device that participates in ranging and that corresponds to the current list element. An address of the device is determined based on the address field in Table 2.

The address field indicates the address of the device that participates in ranging and that corresponds to the current list element.

It is assumed that there are N (an integer greater than 0) devices in a ranging system that currently uses the conventional technology 1, and each device needs to invoke a maximum of S (an integer greater than 0) slots. In this case, a message length M required by the scheduling IE proposed in the conventional technology 1 may be expressed as:
If the N devices are all short address devices, the message length of the IE is (M = 1 + 3 $*$ N $*$ S) bytes (byte).

If the N devices are all long address devices, the message length of the IE is (M = 1 + 9 $*$ N $*$ S) bytes (byte).

It can be found from the foregoing analysis that the scheduling IE in the conventional technology 1 has the following disadvantages:
High signaling overheads: When the quantity of devices N is fixed, the length of the scheduling IE increases as S increases. For example, the short address is used as an example. When S is equal to 32, the length of the scheduling IE is (M = 1 + 96 $*$

9

N) bytes; or when S is equal to 64, the length of the scheduling IE is (M = 1 + 192 $*$ N) bytes. Therefore, when the quantity of devices N is fixed, if the quantity of slots S that currently need to be scheduled by the system is large (for example, when S $\geq$ 64), high signaling overheads are caused.

Limited flexibility: Each list element (Table 2) of the RDM IE in the conventional technology 1 allows only one device to indicate one slot, and one device cannot indicate a plurality of slots. As a result, flexibility of indicating scheduling by the RDM IE is limited. Specifically, if a device needs to indicate a plurality of slots, a plurality of list elements shown in Table 2 are required. Consequently, signaling indication redundancy is caused, that is, the foregoing signaling overhead problem is caused.

Conventional technology 2

The conventional technology 2 provides a format of a bitmap (bitmap)-based scheduling information element (information element, IE) for a UWB. Table 3 shows the format of the bitmap-based scheduling IE provided in the conventional technology 2.

Table 3

| Octets: 1 | Variable value (one or more octets (octets)) |
|---|---|
| Control (control field) | Scheduling List (scheduling list field) |

The control field occupies a size of one octet (octet), and the scheduling list field occupies a size of one or more octets. Table 4 shows a format of the control field of the bitmap-based scheduling IE provided in the conventional technology 2.

Table 4

| Bits: 0 | 1-7 |
|---|---|
| Address Type (address type) | Scheduling List Length (scheduling list length) |

When address type is 0, it indicates that a device address is a short address, that is, an address length is 2 bytes (16 bits). When address type is 1, it indicates that a device address is a long address (or extended address), that is, an address length is 8 bytes (64 bits). The device address herein is an address of a device scheduled by the bitmap-based scheduling IE, namely, the address of the device related to the scheduling list.

Scheduling list length indicates a quantity of list elements in the scheduling list field. The list element is carried in the scheduling list field. Table 5 shows a format of a list element in the scheduling list in the conventional technology 2.

Table 5

| Bits: 0-1 | 2-7 | Variable value (one or more octets (octets)) | 2 octets or 8 octets |
|---|---|---|---|
| Bitmap Size (bitmap size) | Reserved (reserved) | Bitmap (bitmap) | Address (address) |

Bitmap (bitmap) in Table 5 indicates a one-dimensional bit string, for example, 0000100100100000. Bitmap size indicates a length of the bitmap. A relationship between a value of bitmap size and the length of bitmap is shown in Table 6 below. Table 6 shows the relationship between the value of bitmap size and the length of bitmap.

Table 6

| Value of bitmap size | Meaning |
|---|---|
| 0 | 1-byte bitmap (8-bit bitmap) |
| 1 | 2-byte bitmap (16-bit bitmap) |
| 2 | 4-byte bitmap (32-bit bitmap) |
| 3 | 8-byte bitmap (64-bit bitmap) |

For example, bitmap shown in Table 7 indicates a bit string whose length is 8, that is, indicates eight slots (each bit corresponds to one slot), that is, a corresponding value of bitmap size is 0. If a bit is 1, it indicates that a device that participates in ranging and that corresponds to a list element corresponding to bitmap sends a UWB signal in a slot corresponding to the bit. Correspondingly, if a bit is 0, it indicates that the device does not send a UWB signal in a slot corresponding to the bit 0.

Table 7

| 0 | 1 | 0 | 1 | 1 | 0 | 1 | 1 |
|---|---|---|---|---|---|---|---|

Bitmap shown in Table 7 sequentially indicates a slot 1 to a slot 8 (or a slot 0 to a slot 7) from left to right. If bits corresponding to the slot 2, the slot 4, the slot 5, the slot 7, and the slot 8 are all 1, it indicates that the device sends the UWB signal in the slot 2, the slot 4, the slot 5, the slot 7, and the slot 8. If bits corresponding to the slot 1, the slot 3, and the slot 6 are all 0, it indicates that the device does not send the UWB signal in the slot 1, the slot 3, and the slot 6.

It should be noted that, in this specification, a manner of describing, for example, bitmap in Table 7 is a left-to-right indication manner by default. In other words, bitmap sequentially indicates a near-to-far sequence of the slots from left to right. For example, for bitmap whose length is 1 byte, bitmap sequentially indicates a slot 1 to a slot 8 (or a slot 0 to a slot 7) from left to right. In addition, bitmap in embodiments of this application may alternatively be described from right to left, that is, sequentially indicate a near-to-far sequence of the slots. A description sequence of bitmap is not limited in embodiments of this application. This specification is described by using an indication manner from left to right as an example.

It is assumed that there are N (an integer greater than 0) devices in a system that currently uses the conventional technology 2, and each device needs to invoke a maximum of S (an integer greater than 0) slots. In this case, a message length M required by the scheduling IE proposed in the conventional technology 2 may be expressed as:

If the N devices are all short address devices, the message length of the IE is M = 1 + N $*$ ( $3 + \left\lceil \frac{S}{8} \right\rceil$ ) bytes.

If the N devices are all long address devices, the message length of the IE is M = 1 + N $*$ ( $9 + \left\lceil \frac{S}{8} \right\rceil$ ) bytes.

The symbol $\lceil \ \rceil$ indicates rounding up.

It can be found from the foregoing analysis that the scheduling IE in the conventional technology 2 has the following disadvantages:

High signaling overheads: When the quantity of devices N is fixed, the message length of the scheduling IE increases as S increases. The short address is used as an example. When S is equal to 32, the length of the scheduling IE is (M = 1 + N $*$ 7) bytes; or when S is equal to 64, the length of the scheduling IE is (M = 1 + 11 $*$ N) bytes. Therefore, when the quantity of devices N is fixed, if the quantity of slots S that currently need to be scheduled by the system is large (for example, when S $\geq$ 64), high signaling overheads are caused.

Message indication redundancy: In the conventional technology 2, the bitmap indicates whether a slot is used to transmit the UWB signal. For a slot that does not participate in sending, a bit still needs to be set to 0. As a result, a message indication is not flexible enough, and unnecessary message indication redundancy is caused.

For UWB applications with a repetition period transmission structure such as narrow-band assisted multi-millisecond (narrow-band assisted multi-millisecond, NBA-MMS) and DL-TDOA/UL-TDOA positioning and sensing, using only the bitmap to indicate whether a slot is used to transmit the UWB signal causes unnecessary repetition redundancy, and when a quantity of repetitions is large, large indication redundancy is caused.

It can be learned from the foregoing descriptions that the scheduling information elements provided in the conventional technology 1 and the conventional technology 2 both have the disadvantage of high overheads. To avoid a problem of the high signaling overheads caused by using the scheduling information element provided in the conventional technology 1 or the conventional technology 2, embodiments of this application provide a scheduling solution for a UWB with low signaling overheads. The following describes a topology structure and a system to which the scheduling solution for the UWB provided in embodiments of this application is applicable.

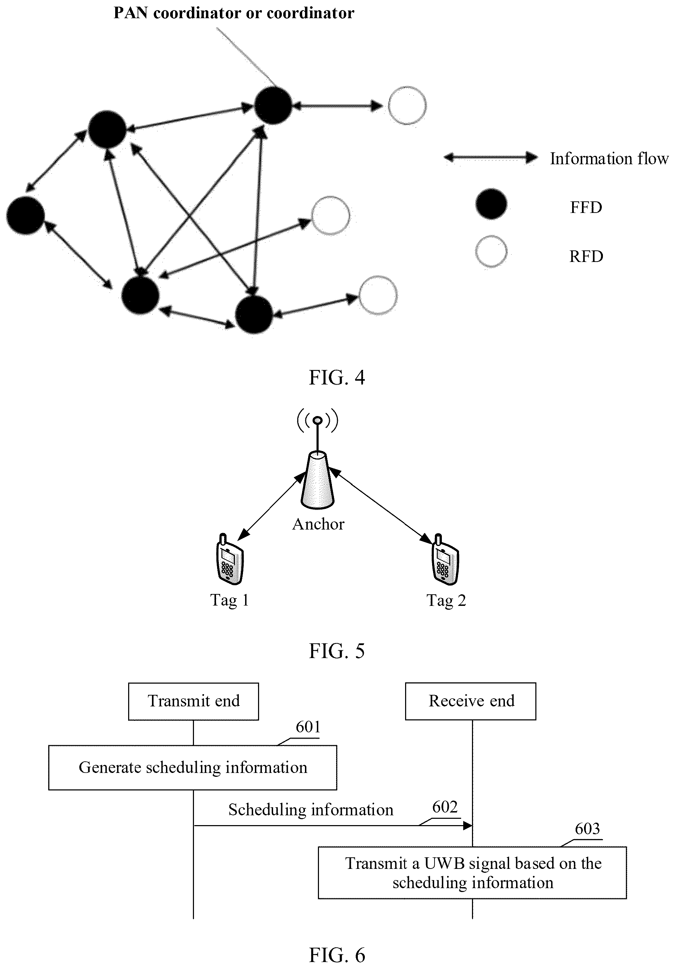

The scheduling solution for the UWB provided in embodiments of this application may operate in a star topology structure, a point-to-point topology structure, or a mesh topology structure. The scheduling solution for the UWB provided in embodiments of this application may further operate in another topology structure. This is not limited in embodiments of this application. FIG. 3 is a schematic of an example of a star topology structure. As shown in FIG. 3, a star topology involves data communication between one or more other devices and a central control node, for example, a personal area network (personal area network, PAN) coordinator or coordinator shown in FIG. 3. The scheduling solution for the UWB provided in embodiments of this application is applicable to data communication/sensing/ranging/positioning between a central control node and one or more other devices in a star topology. FIG. 4 is a schematic of an example of a point-to-point topology structure or a mesh topology structure. The scheduling solution for the UWB provided in embodiments of this application is also applicable to communication/sensing/ranging/positioning between different devices in a point-to-point topology structure or a mesh topology structure (FIG. 4). In FIG. 3 and FIG. 4, a black node is a full-function device (full-function device, FFD), and a white node is a reduced-function device (reduced-function device, RFD). The FFD may serve as the PAN coordinator or coordinator, but the RFD cannot serve as the PAN coordinator or coordinator. FFDs can communicate with each other, and the FFD and the RFD can communicate with each other. RFDs cannot directly communicate with each other, and can only communicate with the FFD, or forward data externally through one FFD. In a UWB system, the FFD may be an anchor device or a tag device with a strong computing capability (for example, a UWB tag carried on a smartphone), and the RFD is tag device, and has only some computing capabilities.

The technical solutions in embodiments of this application are mainly applicable to the UWB system, for example, a UWB system that supports the IEEE 802.15.4a standard, the IEEE 802.15.4z standard, the IEEE 802.15.4ab standard, or a next-generation standard of the IEEE 802.15.4ab standard. A person skilled in the art easily understands that aspects of this application may be extended to other networks using various standards or protocols, for example, Bluetooth (Bluetooth), a high-performance radio LAN (high performance radio LAN, HIPERLAN) (a wireless standard similar to the IEEE 802.11 standard, mainly used in Europe), a wide area network (WAN), a personal area network (personal area network, PAN), or another network currently known or later developed. Therefore, regardless of a used coverage area and a used wireless access protocol, the various aspects provided in embodiments of this application are applicable to any appropriate wireless network.

FIG. 5 shows an example of a UWB system to which a technical solution according to an embodiment of this application is applicable. The UWB system includes one or more anchors (anchor) and one or more tags (tag). FIG. 5 shows only one anchor, a tag 1, and a tag 2. Protocols supported by the anchor and the tag may include protocols such as IEEE 802.15.4a, IEEE 802.15.4z, and IEEE 802.15.4ab. Certainly, with continuous evolution and development of communication technologies, the WLAN protocol may further include a next-generation protocol of IEEE 802.15.4ab, and the like. The anchor may be an access point, and the tag mat be a station (Station, STA). Both the access point and the STA support a WLAN protocol, and the WLAN protocol may include IEEE 802.11be (or referred to as Wi-Fi 7 or the EHT protocol).

The access point is an apparatus having a wireless communication function, supports communication by using the WLAN protocol, and has a function of communicating with another device (for example, a station or another access point) in the WLAN network. Certainly, the access point may further have a function of communicating with another device. The UWB system includes one or more access point (access point, AP) stations and one or more non-access point stations (non-access point station, non-AP STA). For ease of description, in this specification, an access point station is referred to as an access point (AP), and a non-access point station is referred to as a station (STA).

The access point may be an entire device, or may be a chip, a processing system, or the like installed in the entire device. The device in which the chip or the processing system is installed may implement a method and a function in embodiments of this application under control of the chip or the processing system (namely, the AP). The AP in embodiments of this application is an apparatus that provides a service for the station (Station, STA), and may support, for example, IEEE 802.15.4a, IEEE 802.15.4z, IEEE 802.15.4ab, or a next generation thereof. For example, the AP may be a communication entity like a communication server, a router, a switch, a bridge, a computer, or a mobile phone. The AP may include an anchor (anchor), a macro base station, a micro base station (also referred to as a small cell), a picocell base station, a femto base station, a relay station, an access point, a gNB, a transmission reception point (transmission reception point, TRP), an evolved NodeB (evolved NodeB, eNB), a radio network controller (radio network controller, RNC), a home base station (for example, a home evolved NodeB or a home NodeB, HNB), a baseband unit (baseband unit, BBU), a Wi-Fi access point (access point, AP), integrated access and backhaul (integrated access and backhaul, IAB), or the like. Certainly, the AP may alternatively be a chip and a processing system in these devices in various forms, to implement the method and the function in embodiments of this application.

The station is an apparatus having a wireless communication function, supports communication by using the WLAN protocol, and has a capability of communicating with another station or access point in the WLAN network. For example, the STA is any communication apparatus that allows a user to communicate with the AP and further communicate with the WLAN. The communication apparatus may be an entire device, or may be a chip, a processing system, or the like installed in the entire device. The device in which the chip or the processing system is installed may implement a method and a function in embodiments of this application under control of the chip or the processing system (namely, the station). The STA may include a tag (tag) device/a smart tag (smart tag) device, a mobile phone (mobile phone), a mobile station (mobile station, MS), a tablet computer (pad), a computer with a wireless transceiver function (for example, a notebook computer), a virtual reality (virtual reality, VR) device, an augmented reality (augmented reality, AR) device, a wireless terminal in industrial control (industrial control), a wireless terminal in self driving (self driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a subscriber unit (subscriber unit), a cellular phone (cellular phone), a wireless data card, a personal digital assistant (personal digital assistant, PDA) computer, a tablet computer, a laptop computer (laptop computer), a machine-type communication (machine-type communication, MTC) terminal, or the like. The station may include various handheld devices, vehicle-mounted devices, wearable devices, or computing devices that have a wireless communication function, or other processing devices connected to a wireless modem. Optionally, the station may be a handheld device (handset), a vehicle-mounted device, a wearable device, a terminal in an internet of things or an internet of vehicles network, a terminal in any form in 5G and a communication system evolved after 5G, or the like that has a wireless communication function. This is not limited in this application. The station may support IEEE 802.15 series protocols such as IEEE 802.15.4a, IEEE 802.15.4z, and IEEE 802.15.4ab.

With reference to the accompanying drawings, the following describes the scheduling solution for the UWB provided in embodiments of this application.

FIG. 6 is a flowchart of a scheduling method for a UWB according to an embodiment of this application. The method shown in FIG. 6 may be applied to scenarios such as ranging, sensing, positioning, and communication, for example, is applicable to scenarios such as NBA-MMS-based ranging, DL-TDOA-based positioning, and UL-TDOA-based positioning and sensing. As shown in FIG. 6, the method includes the following steps.

601: A transmit end generates scheduling information.

The transmit end may be a UWB device that supports a UWB standard. The transmit end may be an AP, or may be a station. The transmit end may be an FFD, or may be an RFD. The transmit end may be a ranging, sensing, positioning, or communication initiator (initiator), namely, a ranging initiator, a sensing initiator, a positioning initiator, or a communication initiator, may be a ranging, sensing, positioning, or communication responder (responder), namely, a ranging responder, a sensing responder, a positioning responder, or a communication responder, or may be a third-party device (which may be referred to as a controller device), that is, may not be an initiator or a responder (responder) of ranging, sensing, positioning, or communication. For example, the transmit end is the third-party device, and the scheduling information is a ranging control message (ranging control message, RCM). After receiving the scheduling information, all initiators/rangers that participate in a ranging process interpret information related to the initiators/rangers in the scheduling information (for example, sending of a corresponding slot subscript), and execute corresponding ranging processes in a measurement phase.

The scheduling information includes a first field and a second field. The first field indicates a time unit in which a UWB device transmits a UWB signal. For example, the first field indicates a time unit in a 1st scheduling period in which the UWB device transmits the UWB signal. For example, the first field may be referred to as a time unit index (time unit index) field, may be referred to as a slot index (slot index) field, or may be referred to as a starting slot index (starting slot index) field. In this embodiment of this application, a name of the first field is not limited. The second field indicates a scheduling period (which may be referred to as a period for short) in which the UWB device transmits the UWB signal. The second field may be referred to as a period index (period index) field or another field. The following describes implementations of the first field and the second field with reference to an example of the scheduling information.

In a possible implementation, the scheduling information further includes a third field, and the third field indicates a quantity of repetitions of transmitting the UWB signal by the UWB device, namely, a quantity of repetitions of UWB transmission. A value indicated by R bits included in the third field indicates the quantity of repetitions of transmitting the UWB signal by the UWB device, and R is an integer greater than 0. For example, R is any one of 2, 3, 4, 5, 6, and the like. For example, the third field may be referred to as a repetition index (repetition index) field or another field. Optionally, the third field indicates consecutive values, for example, 1 to 32 times. A quantity that can be indicated by the third field is not limited in this embodiment of this application. Optionally, the third field indicates non-consecutive natural numbers. For example, the third field may indicate any quantity in a value combination (including a plurality of non-consecutive natural numbers), for example, 8, 16, 32, 64, or 128. For example, when a value of the third field is 1 (that is, repetition index is equal to 1), a quantity of times of periodically transmitting the UWB signal (or periodic UWB transmission) is 16. For another example, when the value of the third field is 2 (that is, repetition index is equal to 2), the quantity of times of periodic UWB transmission is 32. The non-consecutive values that can be indicated by the third field are not limited in embodiments of this application. In this implementation, the third field indicates the quantity of repetitions of transmitting the UWB signal by the UWB device. Both the first field and the second field can be used to indicate a time unit in each scheduling period in which the UWB device transmits the UWB signal, so that fewer bits are occupied. This can reduce signaling overheads.

In a possible implementation, the scheduling information implicitly (or non-explicitly) indicates a quantity of repetitions of transmitting the UWB signal by the UWB device. For example, any scheduling information considers by default that the quantity of repetitions of transmitting the UWB signal by the UWB device is 16, and the scheduling information does not need to indicate, by using carried information, the quantity of repetitions of transmitting the UWB signal by the UWB device. In other words, the UWB device can learn of the quantity of repetitions of transmitting the UWB signal without using the scheduling information. For example, the quantity of repetitions of transmitting the UWB signal is preconfigured for the UWB device. In this implementation, the scheduling information implicitly (or non-explicitly) indicates the quantity of repetitions of transmitting the UWB signal by the UWB device, so that the occupied bits can be reduced.

In a possible implementation, the scheduling information further includes an address of the UWB device, and a length of the address of the UWB device is 2 bytes or 8 bytes. In this implementation, the scheduling information further includes the address of the UWB device, so that the UWB device learns of a time unit to be occupied by the UWB device to transmit the UWB.

In a possible implementation, the scheduling information includes a control (control) field and a scheduling list (scheduling list) field. The scheduling list field includes one or more list elements. The first field, the second field, the third field, and the address of the UWB device may be included in a same list element.

602: The transmit end sends the scheduling information.

A possible implementation of step 602 is as follows: The transmit end sends the scheduling information in a broadcast or multicast manner. Another possible implementation of step 602 is as follows: The transmit end separately sends the scheduling information to one or more to-be-scheduled UWB devices (namely, receive ends) in a unicast manner. Correspondingly, the receive end receives the scheduling information from the transmit end.

603: The receive end transmits the UWB signal based on the scheduling information.

The receive end may be an anchor, or may be a tag. The receive end may be an FFD, or may be an RFD. The receive end is a UWB device scheduled by using the scheduling information, and the receive end receives the scheduling information from the transmit end. The receive end may be a ranging, sensing, positioning, or communication initiator (initiator), or may be a ranging, sensing, positioning, or communication responder. For example, a list element in the scheduling information includes a first field, a second field, a third field, and an address 1. The first field indicates a time unit for transmitting a UWB signal in a 1st scheduling period in which a UWB device 1 (namely, a receive end) transmits the UWB signal, the second field indicates a scheduling period in which the UWB device 1 transmits the UWB signal, the third field indicates a quantity of repetitions of transmitting the UWB signal by the UWB device 1, and the address 1 is an address of the UWB device 1. The list element is used to schedule the UWB device 1. Step 603 is optional. In actual application, there may be a plurality of receive ends that receive the scheduling information and transmit the UWB signal based on the scheduling information, to complete ranging, sensing, positioning, or communication.

That the receive end transmits the UWB signal based on the scheduling information may be performing sensing, ranging, positioning, or communication by transmitting the UWB signal based on the scheduling information. It should be understood that the scheduling information indicates the time unit in which the UWB device 1 transmits the UWB signal, and the UWB device 1 may transmit the UWB signal in these time units for performing sensing, ranging, positioning, or communication. In some embodiments, the scheduling information indicates time units used by a plurality of UWB devices to transmit the UWB signal, that is, the scheduling information schedules the plurality of receive ends to perform sensing, ranging, positioning, or communication by transmitting the UWB signal. The plurality of UWB devices perform sensing, ranging, positioning, or communication by transmitting the UWB signal based on the scheduling information.

In this embodiment of this application, the first field indicates the time unit used by the UWB device to transmit the UWB signal, and the second field indicates the scheduling period in which the UWB device transmits the UWB signal. Both the first field and the second field can be used to indicate a plurality of time units allocated to the UWB device for transmitting the UWB signal, so that fewer bits are occupied. This can reduce the signaling overheads.

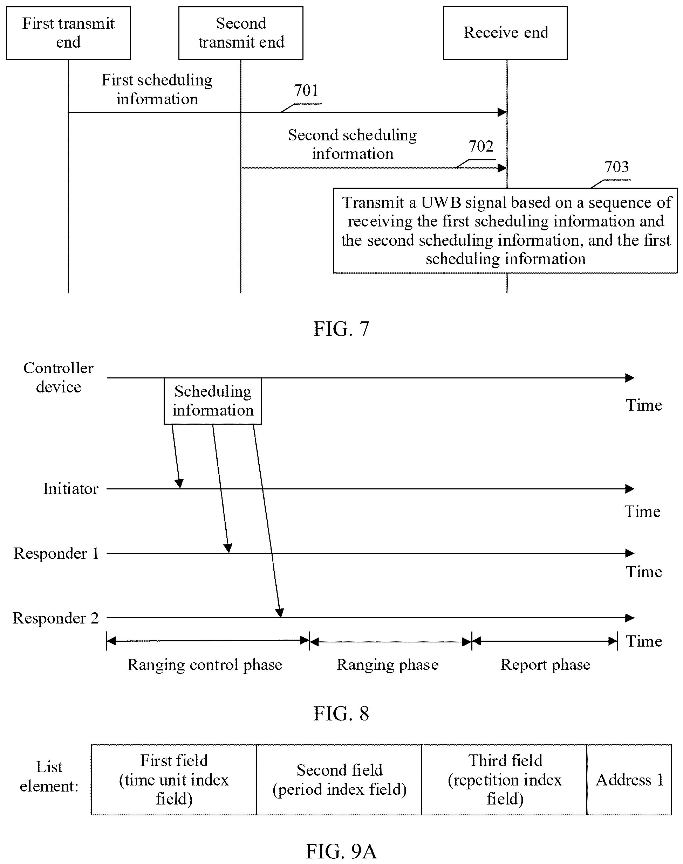

FIG. 7 is a flowchart of another scheduling method for a UWB according to an embodiment of this application. A method procedure in FIG. 7 is a possible implementation of the method described in FIG. 6. In this implementation, a UWB signal is transmitted based on a sequence of receiving scheduling information in different formats, and one of the scheduling information. This can reduce power consumption. As shown in FIG. 7, the method includes the following steps.

701: A first transmit end sends first scheduling information.

The first transmit end may be the transmit end in FIG. 6, and the first scheduling information may be the scheduling information in FIG. 6. Correspondingly, a receive end receives the first scheduling information from the first transmit end. The receive end herein may be the receive end in FIG. 6.

702: A second transmit end sends second scheduling information.

The second transmit end may be the transmit end in FIG. 6, or may not be the transmit end in FIG. 6. Correspondingly, the receive end receives the second scheduling information from the second transmit end. A format of the second scheduling information is different from a format of the first scheduling information. The second transmit end may be an initiator of ranging, sensing, positioning, or communication, may be a responder of ranging, sensing, positioning, or communication, or may be a third-party device, that is, may not be an initiator or a responder of ranging, sensing, positioning, or communication. That the format of the second scheduling information is different from the format of the first scheduling information may be that one or more fields in the second scheduling information are not included in the first scheduling information, or may be that one or more fields in the first scheduling information are not included in the second scheduling information. For example, the second scheduling information includes a second field, and the first scheduling information does not include the second field. It may be understood that if fields in the first scheduling information and fields in the second scheduling information are not completely the same, the format of the second scheduling information is different from the format of the first scheduling information.

703: The receive end transmits a UWB signal based on a sequence of receiving the first scheduling information and the second scheduling information, and the first scheduling information.

A possible implementation of step 703 is as follows: The first scheduling information and the second scheduling information are scheduling information sequentially received by the receive end in a control phase (for example, a ranging control phase in a same ranging round) in a same operating time period, and the receive end transmits the UWB signal based on the first scheduling information that is received earlier. The receive end may transmit the UWB signal only based on the first scheduling information that is received earlier, and may not decode the second scheduling information that is received later. This can reduce energy consumption.

Another possible implementation of step 703 is as follows: The first scheduling information and the second scheduling information are scheduling information sequentially received by the receive end in a control phase (for example, a ranging control phase in a same ranging round) in a same operating time period, and the receive end transmits the UWB signal based on the first scheduling information that is received later. The receive end may transmit the UWB signal only based on the first scheduling information that is received later, and may not decode the second scheduling information that is received earlier. This can reduce energy consumption.

In this embodiment of this application, the receive end transmits the UWB signal based on the sequence of receiving the scheduling information in different formats, and one of the scheduling information. This can reduce the power consumption.

The following describes, with reference to the accompanying drawings, application of the scheduling solution for the UWB provided in embodiments of this application to a ranging scenario. FIG. 8 is a diagram of a scheduling indication in a ranging scenario according to an embodiment of this application. In FIG. 8, a controller device sends, in a ranging control phase, the scheduling information provided in embodiments of this application to an initiator, a responder 1, and a responder 2. The controller device may be the transmit end, and the responder 1 or the responder 2 is the receive end. As shown in FIG. 8, the controller device sends, in the ranging control phase, the scheduling information provided in embodiments of this application to all initiators and/or responders that participate in ranging. The scheduling information may be an RCM or another message. After receiving the scheduling information, all the initiators and/or responders that participate in ranging interpret information related to the initiators and/or responders in the scheduling information, execute corresponding ranging procedures in a measurement phase, and in a measurement report phase, the initiators and/or the responders may report measurement results obtained in the measurement phase. FIG. 8 shows application of the scheduling solution for the UWB to the ranging scenario according to an embodiment of this application. It may be understood that the scheduling solution for the UWB provided in embodiments of this application may also be used for sensing, DL-TDOA positioning, UL-TDOA positioning, communication, and the like. Details are not described herein again. This specification is specifically described by using a case in which the controller device is a third-party device. The solution described in this specification is also applicable to a case in which the controller device is an initiator or a responder. Details are not described.

FIG. 8 shows that the scheduling information provided in embodiments of this application is used in the ranging control phase. FIG. 8 shows merely an example in which the scheduling information provided in embodiments of this application is used in the control phase (control phase) of a measurement period. The scheduling information provided in embodiments of this application may also be used in the measurement phase or the measurement report phase. Usually, if the scheduling information provided in embodiments of this application is used in the measurement phase and the measurement report phase, the corresponding scheduling indication is used in a next round. The next round may be a round adjacent to the current round, or may be a round that is at least one round apart from the current round. For example, current measurement application is ranging. If the scheduling information provided in embodiments of this application is used in the ranging phase and the measurement report phase, the corresponding scheduling indication is used in a next ranging round. The next ranging round may be a ranging round adjacent to the current ranging round, or may be a ranging round that is at least one ranging round apart from the current ranging round.

The scheduling information provided in embodiments of this application may include the control (control) field and the scheduling list (scheduling list) field. The following separately describes an example of the list element in the scheduling list (scheduling list) field and an example of the control field in the scheduling information.

Example 1: An example of a list element in the scheduling list field in the scheduling information.

Refer to FIG. 9A. The list element includes a first field, a second field, a third field, and an address 1. FIG. 9A shows an example of the list element in the scheduling information according to an embodiment of this application. As shown in FIG. 9A, a list element in the scheduling information includes the first field (time unit index field), the second field (period index field), the third field (repetition index field), and the address 1. The first field indicates a time unit for transmitting a UWB signal in a $1^{st}$ scheduling period in which a UWB device 1 transmits the UWB signal, the second field indicates a scheduling period in which the UWB device 1 transmits the UWB signal, the third field indicates a quantity of repetitions of transmitting the UWB signal by the UWB device 1, and the address 1 is an address of the UWB device 1. It may be understood that the list element shown in FIG. 9A indicates a time unit that is to be occupied by the UWB device 1 to transmit the UWB signal, that is, is used to schedule the UWB device 1. The first field indicates a start time unit in which the UWB device 1 transmits the UWB signal. The UWB device 1 may be considered as a UWB device related to the list element. A length of the address 1 is 2 bytes or 8 bytes. In other words, a time unit indicated by the first field may be the start time unit in which the UWB device transmits the UWB signal. In other words, the time unit indicated by the first field may be a time unit in which the UWB device transmits the UWB signal in the $1^{st}$ scheduling period. Optionally, the first field indicates a subscript of the start time unit in which the UWB device transmits the UWB signal. A specific manner is similar to that of the ranging slot index field in the conventional technology 1. Details are not described herein again. Refer to Table 2. The ranging slot index field in the conventional technology 1 occupies 7 bits. For example, the first field occupies 7 bits, and the first field and the ranging slot index field in the conventional technology 1 indicate, in the same manner, the subscript of the start time unit allocated to the UWB device 1.

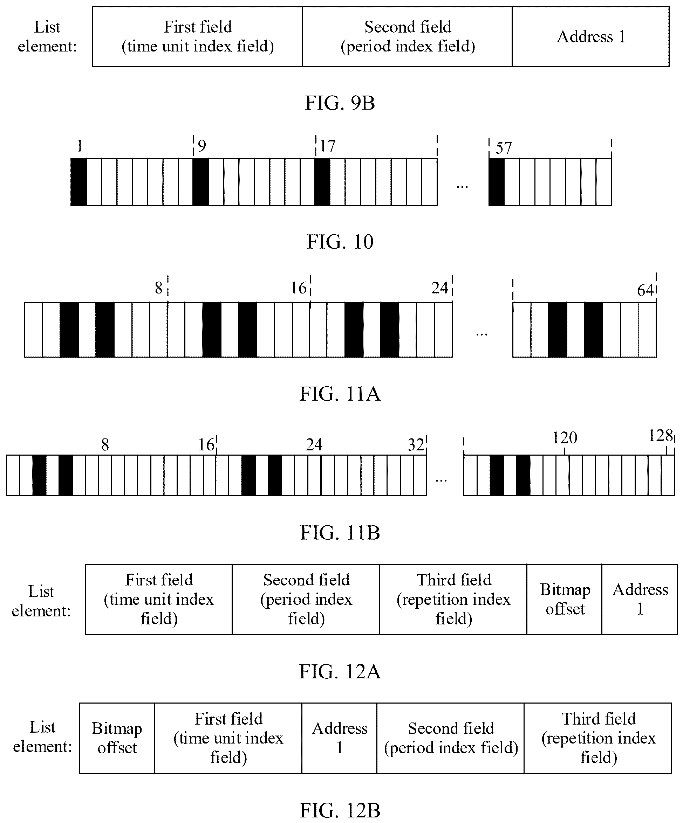

The third field is optional. For example, the list element includes the first field, the second field, and the address 1 (refer to FIG. 9B), and the quantity of repetitions of transmitting the UWB signal is preconfigured for the UWB device 1. For example, the quantity of repetitions of transmitting the UWB signal is preconfigured as 16 for the UWB device 1. FIG. 9B shows another example of the list element in the scheduling information according to an embodiment of this application. As shown in FIG. 9B, a list element in the scheduling information includes the first field (time unit index field), the second field (period index field), and the address 1. The first field indicates the time unit for transmitting the UWB signal in the 1st scheduling period in which the UWB device 1 transmits the UWB signal, the second field indicates the scheduling period in which the UWB device 1 transmits the UWB signal, and the address 1 is the address of the UWB device 1. The scheduling information implicitly indicates the quantity of repetitions of transmitting the UWB signal by the UWB device 1. It may be understood that the list element shown in FIG. 9B indicates a time unit that is to be occupied by the UWB device 1 to transmit the UWB signal, that is, is used to schedule the UWB device 1. FIG. 9A and FIG. 9B show two examples of the list element in the scheduling information. It should be understood that formats of list elements in the scheduling information are the same, and each list element is used to schedule one UWB device.

A value indicated by the second field indicates the scheduling period in which the UWB device 1 transmits the UWB signal. Optionally, the second field (namely, the period index field) indicates consecutive values, for example, 1 to 32 or 1 to 64. A value indicated by P bits included in the second field indicates the scheduling period in which the UWB device 1 transmits the UWB signal, and P is an integer greater than 0. For example, P is any one of 4, 5, 6, 7, 8, and the like. For example, the value indicated by the second field is a quantity of time units corresponding to the scheduling period, for example, 1 to 32 time units. The quantity of time units that can be indicated by the second field is not limited in embodiments of this application. A unit of the value indicated by the second field may be a single time unit, or may be a plurality of time units. The time unit may be a slot, for example, a ranging slot, may be an RSTU, or may be a sensing scheduling time unit. The sensing scheduling time unit is a time unit that can be used to determine duration of a sensing block, a sensing round, and a sensing slot. The time unit may alternatively be another time length. This is not limited in embodiments of this application.

Optionally, the second field indicates non-consecutive natural numbers. A natural number indicated by H bits included in the second field indicates the scheduling period in which the UWB device 1 transmits the UWB signal, and H is an integer greater than 0. For example, H is any one of 1, 2, 3, and the like. Optionally, the second field indicates any one of a group of quantities of time units (including a plurality of time units), for example, a quantity of time units like 8, 16, 32, 64, or 128. For example, when the value of the second field is 0 (that is, period index is equal to 0), the scheduling period in which the UWB device periodically transmits the UWB signal is 8 time units, that is, the scheduling period of UWB transmission is 8 time units. For another example, when the value of the second field is 1 (that is, period index is equal to 1), the scheduling period in which the UWB device periodically transmits the UWB signal is 16 time units, that is, the scheduling period of UWB transmission is 16 time units. For example, the first field indicates the start time unit in which the UWB device 1 transmits the UWB signal, and the second field indicates that the period in which the UWB device 1 transmits the UWB signal is 8 time units, that is, there is an interval of 8 time units between any two times of UWB transmission. The non-consecutive values that can be indicated by the second field are not limited in embodiments of this application.

Table 8 shows an example of a list element in the scheduling list field in the scheduling information provided in embodiments of this application.

Table 8

| Bits: 0-6 | 7-10 | 11-15 | 2 octets or 8 octets |
|---|---|---|---|
| First field (time unit index) | Second field (period index) | Third field (repetition index) | Address (Address) 1 |

Refer to Table 8. The first field occupies 7 bits, namely, a bit 0 to a bit 6, the second field occupies 4 bits, namely, a bit 7 to a bit 10, the third field occupies 5 bits, namely, a bit 11 to a bit 15, and the address 1 occupies 2 bytes or 8 bytes. It may be understood that Table 8 shows merely an example of a list element in the scheduling list field in the scheduling information, and a quantity of bits occupied by and a location of each of the first field, the second field, and the third field in the list element are not limited.

The first field may be the ranging slot index field in the conventional technology 1. For example, the first field indicates that the start time unit in which the UWB device 1 transmits the UWB signal is a time unit 1, the second field indicates that the scheduling period in which the UWB device 1 transmits the UWB signal is 8 time units, that is, there is an interval of 8 time units between any two times of UWB transmission, and the third field indicates that the quantity of repetitions of transmitting the UWB signal by the UWB device 1 is 8. Refer to FIG. 10. With reference to the first field, the second field, and the third field, the time unit 1, a time unit 9, a time unit 17, ..., and a time unit 57 that are used by the UWB device 1 to transmit the UWB signal are indicated. FIG. 10 is a diagram of the time units used by the UWB device 1 to transmit the UWB signal according to an embodiment of this application. As shown in FIG. 10, a black rectangle indicates a time unit to be occupied by the UWB device 1 to transmit the UWB signal (namely, a time unit for transmitting the UWB signal), a white rectangle indicates a time unit not to be occupied by the UWB device 1 to transmit the UWB signal (namely, a time unit not for transmitting the UWB signal), and a number above the time unit indicates a sequence number of the time unit. A time unit 1 is a start time unit in which the UWB device 1 transmits the UWB signal and that is indicated by the first field, a scheduling period in which the UWB device 1 transmits the UWB signal is 8 time units, and a quantity of repetitions of transmitting the UWB signal by the UWB device 1 is 8.

Example 2: An example of a list element in the scheduling list field in the scheduling information.

Refer to FIG. 9A. The list element includes the first field, the second field, the third field, and the address 1. For the second field, the third field, and the address 1 in Example 2, refer to the second field, the third field, and the address 1 in Example 1 respectively. In other words, the second field in Example 2 may be the same as the second field in Example 1, the third field in Example 2 may be the same as the third field in Example 1, and the address 1 in Example 2 may be the same as the address 1 in Example 1. The third field is optional. For example, the list element includes the first field, the second field, and the address 1 (refer to FIG. 9B), and the quantity of repetitions of transmitting the UWB signal is preconfigured for the UWB device 1. For example, the quantity of repetitions of transmitting the UWB signal is preconfigured as 16 for the UWB device 1.

The first field indicates a quantity of time units before the start time unit that is in a measurement period (which may alternatively be a communication period) and in which the UWB device 1 transmits the UWB signal. In other words, the first field indicates the quantity of time units before the start time unit that is in the measurement period and in which the UWB device 1 transmits the UWB signal, and the measurement period includes the start time unit. The measurement period is a time period in which the UWB device completes one or more measurement tasks. The measurement period may be a ranging round (or referred to as a ranging period), a sensing round, a positioning round, or the like. A quantity of time units indicated by the first field is equal to a quantity of time units between a $1^{st}$ time unit and the start time unit in the measurement period plus 1. It is assumed that the quantity of time units indicated by the first field is T, and time units in the measurement period are sequentially a time unit 0 ($1^{st}$ time unit), a time unit 1, a time unit 2, and the like in a time sequence. In this case, the start time unit is the time unit T, and T is an integer greater than 1. For any UWB device, the $1^{st}$ time unit in the measurement period is known. Therefore, the any UWB device may determine, based on the first field, the start time unit for transmitting the UWB signal. The ranging round (refer to FIG. 1) is used as an example. Each ranging slot in the ranging round is a time unit, a $1^{st}$ ranging slot in the ranging round is the time unit 0, a $2^{nd}$ ranging slot is the time unit 1, a $3^{rd}$ ranging slot is the time unit 2, and so on. If the first field indicates that a quantity of time units before the start time unit that is in the ranging round and in which the UWB device 1 transmits the UWB signal is T, the start time unit is the time unit T. For any UWB device, the $1^{st}$ ranging slot in the ranging round is known. Therefore, the start time unit for transmitting the UWB signal may be determined based on the first field.

For bits included in each field in the list element in Example 2, refer to Table 8. The first field in Example 2 may occupy 7 bits, namely, a bit 0 to a bit 6, or may occupy fewer bits, for example, occupy 5 bits, and 2 bits are reserved. It should be understood that a length of the list element in Example 2 is equal to a length of the list element in Example 1, and both are 4 bytes (corresponding to a short address) or 10 bytes (corresponding to an extended address).

Example 3: An example of a list element in the scheduling list field in the scheduling information.

Refer to FIG. 9A. The list element includes the first field, the second field, the third field, and the address 1. The second field in Example 3 may be the same as the second field in Example 1, the third field in Example 3 may be the same as the third field in Example 1, and the address 1 in Example 3 may be the same as the address 1 in Example 1. The third field is optional. The first field is a time unit bitmap. Optionally, the list element further includes a bitmap size (bitmap size) field, namely, a field indicating a length of the time unit bitmap. Optionally, the list element further includes a reserved field, and the reserved (reserved) field includes one or more reserved bits. A size and a location of the bitmap size (bitmap size) field are not limited in embodiments of this application. A size and a location of the reserved field are not limited in embodiments of this application.

The first field is the time unit bitmap, the time unit bitmap corresponds to a plurality of time units (for example, a time unit 1 to a time unit 8), and the time unit bitmap indicates whether the time unit is used by the UWB device 1 to transmit the UWB signal. For the UWB device 1, a time unit corresponding to each bit in the time unit bitmap is known. For example, a time unit corresponding to a $1^{st}$ bit of the time unit bitmap is a $1^{st}$ time unit in a measurement period. In a possible implementation, the time unit bitmap indicates a time unit to be occupied to transmit the UWB signal in each scheduling period in which the UWB device 1 transmits the UWB signal, namely, a time unit for transmitting the UWB signal. Optionally, K bits in the time unit bitmap one-to-one correspond to K time units in each scheduling period in which the UWB device 1 transmits the UWB signal, each scheduling period is K time units, and K is an integer greater than 1. For example, the time unit bitmap includes 8 bits, each scheduling period in which the UWB device 1 transmits the UWB signal includes 8 time units, the time unit bitmap indicates that a $3^{rd}$ time unit and a $5^{th}$ time unit in each scheduling period in which the UWB device 1 transmits the UWB signal are used by the UWB device 1 to transmit the UWB signal, and other time units are not used by the UWB device 1 to transmit the UWB signal. In this example, the 8 time units corresponding to the 8 bits included in the time unit bitmap are 8 time units in a $1^{st}$ scheduling period in which the UWB device 1 transmits the UWB signal. If a quantity of time units corresponding to the bits in the time unit bitmap is the same as a quantity of time units included in one scheduling period, the second field is optional. For example, the time unit bitmap indicates that a $3^{rd}$ time unit and a $5^{th}$ time unit in each scheduling period (including 8 time units) in which the UWB device 1 transmits the UWB signal are used to transmit the UWB signal, the second field (optional) indicates that the scheduling period in which the UWB device 1 transmits the UWB signal is 8 time units, and the third field (optional) indicates that the quantity of repetitions of transmitting the UWB signal by the UWB device 1 is 8. Refer to FIG. 11A. With reference to the first field, the second field, and the third field, that the time units in which the UWB device 1 transmits the UWB signal are the $3^{rd}$ time unit and the $5^{th}$ time unit in each scheduling period is indicated. FIG. 11A is another diagram of time units used by the UWB device 1 to transmit the UWB signal according to an embodiment of this application. As shown in FIG. 11A, a black rectangle indicates a time unit used by the UWB device 1 to transmit the UWB signal, a white rectangle indicates a time unit not used by the UWB device 1 to transmit the UWB signal, and a number above the time unit indicates a sequence number of the time unit. Time units in which the UWB device 1 transmits the UWB signal are a $3^{rd}$ time unit and a $5^{th}$ time unit in each scheduling period, a scheduling period in which the UWB device 1 transmits the UWB signal is 8 time units, a quantity of repetitions of transmitting the UWB signal by the UWB device 1 is 8, and eight earliest time units are a $1^{st}$ scheduling period.

Optionally, the K bits in the time unit bitmap one-to-one correspond to K consecutive time units (for example, the first K time units or the last K time units) in each scheduling period in which the UWB device 1 transmits the UWB signal, each scheduling period is Q time units, and Q is an integer greater than K. For example, the time unit bitmap includes 8 bits, each scheduling period in which the UWB device 1 transmits the UWB signal includes 16 time units, the 8 bits in the time unit bitmap one-to-one correspond to the first 8 time units in each scheduling period in which the UWB device 1 transmits the UWB signal, and the time unit bitmap indicates that a $3^{rd}$ time unit and a $5^{th}$ time unit in each scheduling period in which the UWB device 1 transmits the UWB signal are used by the UWB device 1 to transmit the UWB signal, and other time units are not used by the UWB device 1 to transmit the UWB signal. For example, the time unit bitmap indicates that the $3^{rd}$ time unit and the $5^{th}$ time unit in each scheduling period (including 8 time units) in which the UWB device 1 transmits the UWB signal are used by the UWB device 1 to transmit the UWB signal, the second field indicates that the scheduling period in which the UWB device 1 transmits the UWB signal is 16 time units, and the third field (optional) indicates that the quantity of repetitions of transmitting the UWB signal by the UWB device 1 is 8. Refer to FIG. 11B. With reference to the first field, the second field, and the third field, that the time units in which the UWB device 1 transmits the UWB signal are the $3^{rd}$ time unit and the $5^{th}$ time unit in each scheduling period is indicated. FIG. 11B is another diagram of time units used by the UWB device 1 to transmit the UWB signal according to an embodiment of this application. As shown in FIG. 11B, a black rectangle indicates a time unit used by the UWB device 1 to transmit the UWB signal, a white rectangle indicates a time unit not used by the UWB device 1 to transmit the UWB signal, time units in which the UWB device 1 transmits the UWB signal are a $3^{rd}$ time unit and a $5^{th}$ time unit in each scheduling period, a number above the time unit indicates a sequence number of the time unit, a scheduling period in which the UWB device 1 transmits the UWB signal is 16 time units, for example, 16 earliest time units are a $1^{st}$ scheduling period, and a quantity of repetitions of transmitting the UWB signal by the UWB device 1 is 8.

In Example 3, the second field and the third field may occupy 1 byte in total (refer to Table 9 below), the address 1 occupies 2 bytes or 8 bytes, the time unit bitmap occupies one or more bytes, and the bitmap size field and the reserved field may occupy 1 byte in total. It can be learned that a list element in Example 3 may occupy 5 bytes (corresponding to a short address) or 11 bytes (corresponding to an extended address).

Example 4: An example of a list element in the scheduling list field in the scheduling information.

The list element includes a first field, a second field, a third field, a bitmap offset (bitmap offset), and an address 1. Bitmap offset may be referred to as a bitmap offset field. The second field in Example 4 may be the same as the second field in Example 1, the third field in Example 4 may be the same as the third field in Example 1, and the address 1 in Example 4 may be the same as the address 1 in Example 1. The third field is optional. FIG. 12A shows another example of the list element in the scheduling information according to an embodiment of this application. FIG. 12B shows another example of the list element in the scheduling information according to an embodiment of this application. As shown in FIG. 12A and FIG. 12B, a list element in the scheduling information includes the first field (time unit index field), the second field (period index field), the third field (repetition index field), the bitmap offset, and the address 1. The first field indicates the time unit used by the UWB device 1 to transmit the UWB signal in the $1^{st}$ scheduling period in which the UWB device 1 transmits the UWB signal, the second field indicates the scheduling period in which the UWB device 1 transmits the UWB signal, the third field indicates the quantity of repetitions of transmitting the UWB signal by the UWB device 1, and the address 1 is the address of the UWB device 1. Optionally, the list element further includes a bitmap size (bitmap size) field, namely, a field indicating a length of a time unit bitmap. Optionally, the list element further includes a reserved field, and the reserved (reserved) field includes one or more reserved bits.

The first field is the time unit bitmap, the time unit bitmap corresponds to a plurality of time units, and the time unit bitmap indicates whether a time unit is used by the UWB device 1 to transmit the UWB signal. In a possible implementation, the time unit bitmap indicates a time unit used by the UWB device 1 to transmit the UWB signal in each scheduling period in which the UWB device 1 transmits the UWB signal, namely, a time unit to be occupied by the UWB device 1 to transmit the UWB signal. Optionally, K bits in the time unit bitmap one-to-one correspond to K time units in each scheduling period in which the UWB device 1 transmits the UWB signal, each scheduling period is K time units, and K is an integer greater than 1. For example, the time unit bitmap includes 8 bits, each scheduling period in which the UWB device 1 transmits the UWB signal includes 8 time units, the time unit bitmap indicates that a $3^{rd}$ time unit and a $5^{th}$ time unit in each scheduling period in which the UWB device 1 transmits the UWB signal are used by the UWB device 1 to transmit the UWB signal, and other time units are not used by the UWB device 1 to transmit the UWB signal. Optionally, the K bits in the time unit bitmap one-to-one correspond to K consecutive time units (for example, the first K time units or the last K time units) in each scheduling period in which the UWB device 1 transmits the UWB signal, each scheduling period is Q time units, and Q is an integer greater than K. For example, the time unit bitmap includes 8 bits, each scheduling period in which the UWB device 1 transmits the UWB signal includes 16 time units, the 8 bits included in the time unit bitmap one-to-one correspond to the eight earliest time units in the scheduling period, and the time unit bitmap indicates that a $3^{rd}$ time unit and a $5^{th}$ time unit in each scheduling period in which the UWB device 1 transmits the UWB signal are used by the UWB device 1 to transmit the UWB signal, and other time units are not used by the UWB device 1 to transmit the UWB signal.

In a possible implementation, the scheduling information further includes a field indicating the length of the time unit bitmap, and the field may be referred to as the bitmap size (bitmap size) field. For a meaning of the field indicating the length of the time unit bitmap, refer to Table 5 and Table 6. Details are not described herein again. In this implementation, the scheduling information further includes the field indicating the length of the time unit bitmap, so that the length of the time unit bitmap can be accurately determined, and a time unit corresponding to each bit in the time unit bitmap can be determined. A size and a location of the bitmap size field are not limited in embodiments of this application.

The bitmap offset is used to determine a start time unit that is in one measurement period (which may alternatively be a communication period) and in which the UWB device 1 transmits the UWB signal. Optionally, the bitmap offset indicates a quantity of time units before the start time unit that is in the measurement period and in which the UWB device 1 transmits the UWB signal. In other words, the bitmap offset indicates a quantity of time units before a start time unit that is in a measurement period and in which the UWB device 1 transmits the UWB signal, and the measurement period includes the start time unit. For example, a value of the bitmap offset is a quantity of time units before the start time unit in one measurement period. Optionally, the bitmap offset indicates a quantity of unused time units before the start time unit that is in the measurement period and in which the UWB device 1 transmits the UWB signal. For example, the value of the bitmap offset is a quantity of unused time units before the start time unit in one measurement period. Optionally, the value of the bitmap offset is equal to a quantity of time units between a $1^{st}$ time unit and the start time unit in the measurement period plus 1. It is assumed that the value of the bitmap offset is T, and time units in the measurement period are sequentially a time unit 0 ($1^{st}$ time unit), a time unit 1, a time unit 2, and the like in a time sequence. In this case, the start time unit is the time unit T, and T is an integer greater than 1. For any UWB device, the $1^{st}$ time unit in the measurement period is known. Therefore, the any UWB device may determine, based on the bitmap offset, the start time unit for transmitting the UWB signal, namely, a time unit corresponding to a $1^{st}$ bit of the time unit bitmap. The time unit corresponding to the $1^{st}$ bit of the time unit bitmap is the start time unit in which the UWB device 1 transmits the UWB signal.

The bitmap offset may indicate consecutive values. For example, the bitmap offset may indicate a quantity of time units, for example, 0 to 15 time units. The quantity of time units that can be indicated by the bitmap offset is not limited in embodiments of this application. The bitmap offset may also indicate non-consecutive natural numbers. For example, the bitmap offset may indicate any one of a group of quantities of time units, for example, a quantity of time units like 0, 1, 4, 8, 16, or 32. For example, if the value of the bitmap offset is 3, it indicates that the quantity of time units before the start time unit in the measurement period is 8; or if the value of the bitmap offset is 4, it indicates that the quantity of time units before the start time unit in the measurement period is 16. The non-consecutive values that can be indicated by the bitmap offset are not limited in embodiments of this application. A unit of the value of the bitmap offset is not limited in embodiments of this application. The value of the bitmap offset may be one time unit, may be a plurality of time units, or may be an RSTU.

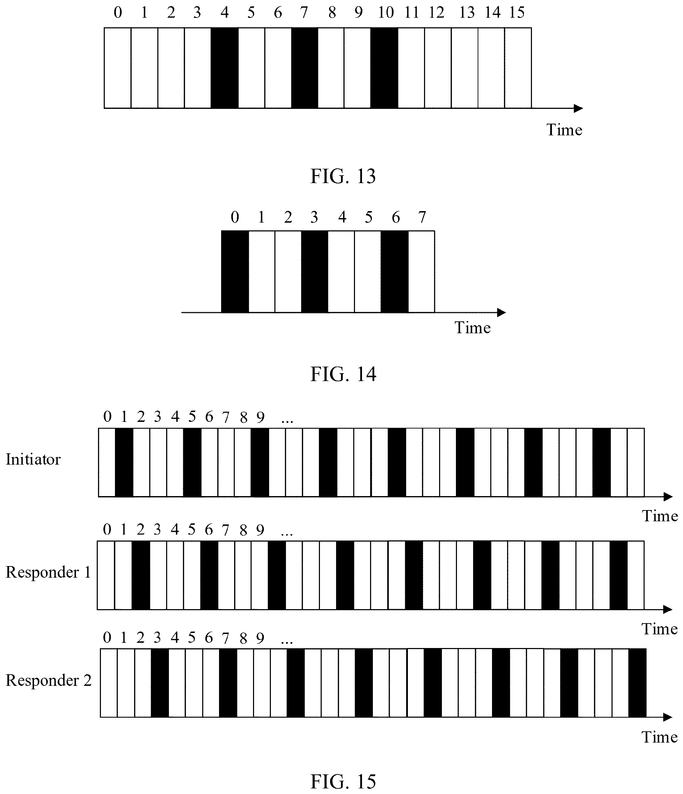

With reference to the bitmap offset, the first field, and the second field, the time unit for transmitting the UWB signal in each scheduling period in which the UWB device 1 transmits the UWB signal may be determined, and unnecessary indication overheads in the bitmap are reduced. This reduces indication overheads of the scheduling information. FIG. 13 shows an example in which a bitmap indicates whether a time unit is used by the UWB device to transmit the UWB signal in the conventional technology. As shown in FIG. 13, each rectangle indicates whether a time unit is used by the UWB device to transmit the UWB signal, and a number above each rectangle indicates a time sequence of the time unit indicated by the rectangle. A black rectangle indicates a time unit used by the UWB device to transmit the UWB signal, and a white rectangle indicates a time unit not used by the UWB device to transmit the UWB signal. A time unit 0 to a time unit 15 are 16 time units corresponding to a bitmap including 16 bits. A time unit corresponding to a $1^{st}$ bit of the bitmap (namely, the time unit 0 in FIG. 13) is a $1^{st}$ time unit in a measurement period. The bitmap indicates whether each time unit in the time unit 0 to the time unit 15 is used by the UWB device to transmit the UWB signal. For example, if a bit in the bitmap is 1, it indicates that a time unit corresponding to the bit is used by the UWB device to transmit the UWB signal. The bitmap in FIG. 13 indicates that the time unit 4, the time unit 7, and the time unit 10 in the measurement period are used by the UWB device to transmit the UWB signal, and other time units in the measurement period are not used by the UWB device to transmit the UWB signal. The bitmap occupies 2 bytes, namely, 16 bits.

The bitmap offset can reduce the unnecessary indication overheads in the bitmap, thereby reducing the indication overheads of the scheduling information. It can be learned from observing FIG. 13 that none of the first four time units in the measurement period is used by the UWB device to transmit the UWB signal, which causes a waste of a bitmap indication. Therefore, it may be considered that the bitmap offset indicates the quantity of time units before the start time unit in which the UWB device transmits the UWB signal, thereby reducing the length of the bitmap. Specifically, the bitmap offset indicates the quantity of time units before the start time unit in which the UWB device transmits the UWB signal. For example, that bitmap offset is equal to 3 indicates that none of the time units 0 to 3 is used. Correspondingly, the time unit in which the UWB device transmits the UWB signal shown in FIG. 13 may be further indicated by FIG. 14. FIG. 14 shows an example in which a time unit bitmap indicates whether a time unit is used by the UWB device 1 to transmit the UWB signal according to an embodiment of this application. As shown in FIG. 14, each rectangle indicates whether a time unit is used by the UWB device 1 to transmit the UWB signal, and a number above each rectangle indicates a time sequence of the time unit indicated by the rectangle. A black rectangle indicates a time unit used by the UWB device 1 to transmit the UWB signal, and a white rectangle indicates a time unit not used by the UWB device 1 to transmit the UWB signal. A time unit 0 to a time unit 7 are 8 time units corresponding to a time unit bitmap including 8 bits. A time unit corresponding to a $1^{st}$ bit of the time unit bitmap (namely, the time unit 0 in FIG. 14) is determined based on the bitmap offset. The time unit bitmap indicates whether each time unit in the time unit 0 to the time unit 7 is used by the UWB device 1 to transmit the UWB signal. For example, if a bit in the time unit bitmap is 1, it indicates that a time unit corresponding to the bit is used by the UWB device 1 to transmit the UWB signal. It is assumed that the bitmap offset indicates that the quantity of time units before the start time unit in which the UWB device 1 transmits the UWB signal is 4, that is, the time units 0 to 3 in a measurement period are not used by the UWB device 1 to transmit the UWB signal. In this case, the time unit corresponding to the $1^{st}$ bit of the time unit bitmap is the time unit 4 in the measurement period, and the time units corresponding to the time unit bitmap are sequentially the time unit 4, the time unit 5, ..., and the time unit 11 in a time sequence. The time units in the measurement period are sequentially the time unit 0, the time unit 1, the time unit 2, and the like in a time sequence. It can be learned from FIG. 14 that an unnecessary indication of the first four time units is moved to the bitmap offset field in the scheduling list field. Therefore, the time unit bitmap may be completed by 8 bits. In other words, in this case, the time unit bitmap needs only 1 byte, and does not need 2 bytes in FIG. 13, thereby reducing message overheads. In other words, the time unit bitmap and the bitmap offset jointly determine a transmission sequence in which the UWB device 1 transmits the UWB signal.

The first field, namely, the time unit bitmap, indicates the time unit used by the UWB device 1 to transmit the UWB signal in the $1^{st}$ scheduling period in which the UWB device 1 transmits the UWB signal. The bitmap offset is used to determine the start time unit that is in the one measurement period and in which the UWB device 1 transmits the UWB signal. It may be understood that the first field and the bitmap offset jointly determine UWB transmission in the $1^{st}$ scheduling period, and the second field and the third field further determine the period and the quantity of repetitions of periodic UWB transmission. For a $2^{nd}$ scheduling period, a $3^{rd}$ scheduling period, ..., and an $X^{th}$ scheduling period of the UWB device 1, a transmission sequence of the UWB signal in each scheduling period is the same as the transmission sequence in the $1^{st}$ period. X is the quantity of repetitions indicated by the third field, and X is an integer greater than 1. For example, the scheduling periods of the UWB device 1 are sequentially the $1^{st}$ scheduling period, the $2^{nd}$ scheduling period, the $3^{rd}$ scheduling period, ..., and the $X^{th}$ scheduling period. The first field and the bitmap offset jointly determine that the $1^{st}$ time unit and the $3^{rd}$ time unit in the $1^{st}$ scheduling period are used by the UWB device 1 to transmit the UWB signal, and the second field and the third field further determine that the $1^{st}$ time unit and the $3^{rd}$ time unit in the $2^{nd}$ scheduling period, the $3^{rd}$ scheduling period, ..., and the $X^{th}$ scheduling period are used by the UWB device 1 to transmit the UWB signal. Time units in each scheduling period are sequentially a $1^{st}$ time unit, a $2^{nd}$ time unit, a $3^{rd}$ time unit, ..., and a $C^{th}$ time unit in a time sequence, where C is a quantity of time units included in the scheduling period, and C is an integer greater than 1. In other words, for a periodic UWB transmission process of any UWB device, the periodic UWB transmission process may be completely determined by determining a time unit for transmitting a UWB signal in a $1^{st}$ scheduling period of the UWB device (indicated by the first field or indicated by the first field and the bitmap offset), a scheduling period (indicated by the second field), and a quantity of times of repeated transmission (indicated by the third field). In other words, a specific time unit allocated to the any UWB device for the periodic UWB transmission may be completely determined.

Table 9, Table 10, Table 11, and Table 12 are four examples of list elements in the scheduling information provided in embodiments of this application.

Table 9

| Bits: 0-1 | 2-5 | 6-7 | Variable value (one or more octets) | 2 octets or 8 octets | Bits: 0-3 | 4-7 |
|---|---|---|---|---|---|---|
| Bitmap Size (bitmap size) field | Bitmap Offset (bitmap offset) | Reserved (reserved) | Bitmap (time unit bitmap) | Address Type (address) 1 | Second field (Period Index) | Third field (Repetition Index) |

Refer to Table 9. The bitmap size field occupies 2 bits, namely, a bit 0 and a bit 1; bitmap offset occupies 4 bits, namely, a bit 2 to a bit 5, the reserved field occupies 2 bits, namely, a bit 6 and a bit 7, time unit bitmap occupies one or more bytes, that is, the length of time unit bitmap is a variable value, the address 1 occupies 2 bytes or 8 bytes, the second field occupies 4 bits, and the third field occupies 4 bits. It may be understood that Table 9 shows merely an example of a list element in the scheduling list field in the scheduling information, and a quantity of bits occupied by each field and a location of the field in the list element are not limited.

Table 10

| Bits: 0-1 | 2 | 3 | 4-7 | Variable value (one or more octets (octets)) | 2 octets or 8 octets | Bits: 0-3 | 4-7 |
|---|---|---|---|---|---|---|---|
| Bitmap Size (bitmap size) | Receiver Address Presence | Ranging Role | Bitmap Offset (bitmap offset) | Bitmap (time unit bitmap) | Address Type (address) 1 | Second field (Period Index) | Third field (Repetition Index) |

Refer to Table 10. The ranging role field and the receiver address presence field (receiver address presence field) in the conventional technology appear in the format of the list element provided in embodiments of this application. In other words, the scheduling information provided in embodiments of this application may allow the ranging role field and the receiver address presence field to appear, or may allow one of the ranging role field and the receiver address presence field to appear, for example, as shown in the following forms of Table 11 and Table 12 below. This is not limited in embodiments of this application.

Table 11

| Bits: 0-1 | 2 | 3-6 | 7 | Variable value (one or more octets (octets)) | 2 octets or 8 octets | Bits: 0-3 | 4-7 |
|---|---|---|---|---|---|---|---|
| Bitmap Size (bitmap size) | Receiver Address Presence | Bitmap Offset (bitmap offset) | Reserved (reserved) | Bitmap (time unit bitmap) | Address Type (address) 1 | Second field (Period Index) | Third field (Repetition Index) |

Table 12

| Bits: 0-1 | 2 | 3-6 | 7 | Variable value (one or more octets (octets)) | 2 octets or 8 octets | Bits: 0-3 | 4-7 |
|---|---|---|---|---|---|---|---|
| Bitmap Size (bitmap size) | Ranging Role | Bitmap Offset (bitmap offset) | Reserved (reserved) | Bitmap (time unit bitmap) | Address Type (address) 1 | Second field (Period Index) | Third field (Repetition Index) |

Table 10, Table 11, and Table 12 are examples in which fields (for example, the ranging role field and the receiver address presence field) in the conventional technology are placed in the scheduling information provided in embodiments of this application. It should be understood that another field in the conventional technology may be further placed in the scheduling information provided in embodiments of this application. In embodiments of this application, a sequence location and a field size of the bitmap offset field, the ranging role field, the receiver address presence field, and the like are not limited. Table 10, Table 11, and Table 12 are merely examples.

Refer to Table 9 to Table 12. The list element in Example 4 may occupy 5 bytes (corresponding to a short address) or 11 bytes (corresponding to an extended address).

Example 5: An example of a list element in the scheduling list field in the scheduling information.

The list element includes a first field, a second field, a third field, a fourth field, a bitmap offset, and an address 1. The first field in Example 5 may be the same as the first field in Example 4, the second field in Example 5 may be the same as the second field in Example 4, the third field in Example 5 may be the same as the third field in Example 4, the address 1 in Example 5 may be the same as the address 1 in Example 4, and the bitmap offset in Example 5 may be the same as the bitmap offset in Example 4. The fourth field may be referred to as a period mode field (Period Mode field) or another field. The period mode field indicates a UWB device to periodically transmit a UWB signal. In other words, the period mode field is used to trigger each UWB device scheduled by using the scheduling information to periodically transmit a UWB signal. In other words, the period mode field indicates to trigger a periodic transmission mode. The period mode field may be considered as a periodic transmission mode trigger field. The period mode field may occupy one or more bits. For example, the period mode field includes 1 bit. If a value of the bit is 1, the period mode field indicates the UWB device to periodically transmit the UWB signal, and the scheduling information includes a field related to transmission periodicity, for example, the second field or the third field; or if the value of the bit is 0, the period mode field indicates the UWB device to transmit the UWB signal in another transmission mode, and the scheduling information does not include the field related to transmission periodicity. For example, the scheduling list field in the scheduling information is the same as the scheduling list field in Table 3. Alternatively, if the period mode field indicates the UWB device to periodically transmit the UWB signal, the scheduling information includes the first field and the second field; or if the period mode field indicates the UWB device to transmit the UWB signal in the another mode, the scheduling information does not include the first field and the second field, and the scheduling list in the scheduling information may be the same as the scheduling list in the scheduling information element in the conventional technology 1 (or the conventional technology 2). It should be understood that the list elements in Example 1 to Example 4 may all indicate the UWB device 1 to periodically transmit the UWB signal. In embodiments of this application, the periodic transmission mode is a mode in which the UWB device periodically transmits the UWB signal and that is implemented by using the scheduling information provided in embodiments of this application, and the another transmission mode is any mode other than the periodic transmission mode.

Table 13 shows an example of a list element in the scheduling information provided in embodiments of this application.

Table 13

| Bits: 0-1 | 2-5 | 6 | 7 | Variable value (one or more octets (octets)) | 2 octets or 8 octets | Bits: 0-3 | 4-7 |
|---|---|---|---|---|---|---|---|
| Bitmap Size (bitmap size) field | Bitmap Offset (bitmap offset) | Period Mode | Reserved (reserved) | Bitmap (time unit bitmap) | Address Type (address) 1 | Second field (Period Index) | Third field (Repetition Index) |

Meanings of the fields in Table 13 may be the same as the meanings of the fields in Table 9. A difference between Table 13 and Table 9 lies in that the bit 6 is the period mode field (namely, the fourth field). For example, when period mode is equal to 1, fields related to the transmission periodicity, such as the period index field and the repetition index field, appear and take effect. When period mode is equal to 0, the period index field and the repetition index field, namely, the fields related to the transmission periodicity, do not appear. It may be understood that Table 13 shows merely an example of a list element in the scheduling list field in the scheduling information, and a quantity of bits occupied by each field and a location of the field in the list element are not limited.

Refer to Table 13. The list element in Example 5 may occupy 5 bytes (corresponding to a short address) or 11 bytes (corresponding to an extended address).

Example 6: An example of a list element in the scheduling list field in the scheduling information.

The list element includes a first field, a second field, a third field, a fourth field (Period Index field), and an address 1. The first field in Example 6 may be the same as the first field in Example 1, the second field in Example 6 may be the same as the second field in Example 1, the third field in Example 6 may be the same as the third field in Example 1, the address 1 in Example 6 may be the same as the address 1 in Example 1, and the fourth field in Example 6 may be the same as the fourth field in Example 5.

Table 14 shows an example of a list element in the scheduling information provided in embodiments of this application.

Table 14

| Bits: 0 | Bits: 1-7 | 8-11 | 12-15 | 2 octets or 8 octets |
|---|---|---|---|---|
| Period Mode | First field (time unit index) | Second field (period index) | Third field (repetition index) | Address (Address) 1 |

Refer to Table 14. The fourth field (Period Mode field) occupies 1 bit, namely, a bit 0, the first field occupies 7 bits, namely, a bit 1 to a bit 7, the second field occupies 4 bits, namely, a bit 8 to a bit 11, the third field occupies 4 bits, namely, a bit 12 to a bit 15; and the address 1 occupies 2 bytes or 8 bytes. It may be understood that Table 14 shows merely an example of a list element in the scheduling list field in the scheduling information, and a quantity of bits occupied by and a location of each of the first field, the second field, the third field, and the fourth field in the list element are not limited. In the format of the list element shown in Table 14, when period mode is equal to 1, fields related to transmission periodicity, such as the period index field and the repetition index field, appear and take effect. When period mode is equal to 0, the period index field and the repetition index field, namely, the fields related to transmission periodicity, do not appear.

Refer to Table 14. The list element in Example 6 may occupy 4 bytes (corresponding to a short address) or 10 bytes (corresponding to an extended address).

In Example 1 to Example 6, the first field indicates the time unit for transmitting the UWB signal in the 1st scheduling period of the UWB device 1, and the second field indicates the scheduling period in which the UWB device 1 transmits the UWB signal. Both the first field and the second field can be used to indicate a plurality of time units allocated to the UWB device 1 for transmitting the UWB signal, so that fewer bits are occupied. This can reduce signaling overheads.

Example 7: An example of a control field in the scheduling information.

The control field in the scheduling information includes a fourth field, a fifth field, and a sixth field. The fourth field in Example 7 may be the same as the fourth field in Example 5. The fifth field indicates an address type of the UWB device, and the address type of the UWB device includes a short address (a length of 2 bytes) and an extended address (a length of 8 bytes). The fifth field may be referred to as an address type (address type) field. For example, the fifth field includes 1 bit. If a value of the bit is 0 (that is, address type is 0), the fifth field indicates that the address of the UWB device is the short address, that is, the address length is 2 bytes (16 bits); or if the value of the bit is 1 (that is, address type is 1), the fifth field indicates that the address of the UWB device is the long address (or extended address), that is, the address length is 8 bytes (64 bits). The sixth field indicates a quantity of list elements in the scheduling list. The sixth field may be referred to as a scheduling list length (scheduling list length) field.

Table 15 shows an example of the control field in the scheduling information provided in embodiments of this application.

Table 15

| Bits: 0 | 1-6 | 7 |
|---|---|---|
| Fifth field (Address Type) | Sixth field (Scheduling List Length) | Fourth field (Period Mode) |

Refer to Table 15. The fifth field occupies 1 bit, that is, a bit 0, the sixth field occupies 6 bits, that is, a bit 1 to a bit 6, and the fourth field occupies 1 bit, that is, a bit 7. The fourth field is optional. For example, the control field includes the fifth field and the sixth field, and does not include the fourth field. The scheduling information indicates, by default, that the UWB device periodically transmits a UWB signal or the fourth field is located in the scheduling list field. The control field in the scheduling information provided in embodiments of this application occupies 1 byte. Table 15 shows merely an example of the control field in the scheduling information provided in embodiments of this application. It may be understood that Table 15 shows merely an example of the control field in the scheduling information, and a quantity of bits occupied by each field and a location of the field in the control field are not limited. Refer to Table 15. The control field in the scheduling information provided in embodiments of this application occupies 1 byte. The location of the fourth field is not limited in embodiments of this application, and the fourth field may alternatively be in the list element (refer to Table 13 and Table 14).

In Example 7, the control field in the scheduling information includes the fourth field, the fifth field, and the sixth field. The fourth field indicates the UWB device to periodically transmit the UWB signal. The control field in the scheduling information can indicate the UWB device to periodically transmit the UWB signal, to reduce signaling overheads by indicating the UWB device to periodically transmit the UWB signal. Example 8: An example of the control field in the scheduling information.

The control field in the scheduling information includes a second field, a third field, a fourth field, a fifth field, and a sixth field. The second field in Example 8 may be the same as the second field in Example 1, the third field in Example 8 may be the same as the third field in Example 1, the fourth field in Example 8 may be the same as the fourth field in Example 7, the fifth field in Example 8 may be the same as the fifth field in Example 7, and the sixth field in Example 8 may be the same as the sixth field in Example 7.

Table 16 shows an example of the control field in the scheduling information provided in embodiments of this application.

Table 16

| Bits: 0 | 1-6 | 7 | 8-11 | 12-15 |
|---|---|---|---|---|
| Fifth field (Address Type) | Sixth field (Scheduling List Length) | Fourth field (Period Mode) | Second field (Period Index) | Third field (Repetition Index) |

In this embodiment of this application, a field related to transmission periodicity may be placed in the list element (refer to Table 8 to Table 14), or may be placed in the control field (refer to Table 16). This is not limited in embodiments of this application. In the control field shown in Table 16, when period mode is equal to 1, fields related to transmission periodicity, such as the period index field and the repetition index field, appear and take effect. When period mode is equal to 0, the period index field and the repetition index field, namely, the fields related to transmission periodicity, do not appear.

The example of the scheduling list field and the example of the control field in the scheduling information are provided above. It should be understood that an example of the scheduling information includes the scheduling list field in Example 1 and the control field in Example 7. Another example of the scheduling information includes the scheduling list field in Example 2 and the control field in Example 7. Still another example of the scheduling information includes the scheduling list field in Example 3 and the control field in Example 7. An example of the scheduling information includes the scheduling list field in Example 4 and the control field in Example 7. An example of the scheduling information includes the scheduling list field in Example 5 and the control field shown in Table 2 or Table 4. An example of the scheduling information includes the scheduling list field in Example 6 and the control field shown in Table 2 or Table 4. An example of the scheduling information includes the control field in Example 8 and the scheduling list field shown in Table 5. An example of the scheduling information includes the control field and the scheduling list field 1 in Example 8, and a list element in the scheduling list field 1 includes the time unit index field and the address 1 shown in Table 8. It should be understood that only some rather than all examples of the scheduling information provided in embodiments of this application are shown herein.

The following compares the signaling overheads of the scheduling information provided in embodiments of this application, the signaling overheads of the scheduling information element in the conventional technology 1, and the signaling overheads of the scheduling information element in the conventional technology 2. Table 17 shows the signaling overheads of the scheduling information element in the conventional technology 1, the signaling overheads of the scheduling information element in the conventional technology 2, signaling overheads of scheduling information 1, and signaling overheads of scheduling information 2. The signaling overheads of the scheduling information 1 are equal to signaling overheads of the scheduling information including the scheduling list field in Example 1 and the control field in Example 7. The signaling overheads of the scheduling information 1 are also equal to signaling overheads of the scheduling information including the scheduling list field in Example 2 and the control field in Example 7. The signaling overheads of the scheduling information 2 are equal to the signaling overheads of the scheduling information including the scheduling list field in Example 3 and the control field in Example 7. The signaling overheads of the scheduling information 2 are also equal to signaling overheads of the scheduling information including the scheduling list field in Example 4 and the control field in Example 7.

Table 17

| | Short address device (unit: byte) | Extended address device (unit: byte) |
|---|---|---|
| RDM IE in the conventional technology | $1+3*N*S$ | $1+9*N*S$ |
| Bitmap-based IE in the conventional technology | $1+N*(3+\lceil S/8 \rceil)$ | $1+N*(9+\lceil S/8 \rceil)$ |
| Scheduling information 1 | $1 + 4 * N$ | $1 + 10 * N$ |
| Scheduling information 2 | $1 + 5 * N$ | $1 + 11 * N$ |

In Table 17, S indicates a quantity of time units that need to be invoked by a UWB device, and N indicates a quantity of UWB devices that participate in a current UWB application in a system. S is an integer greater than 0, and N is an integer greater than 0. It can be learned from Table 17 that the scheduling information provided in embodiments of this application does not depend on the quantity of time units S. In other words, a size of the scheduling information provided in embodiments of this application does not increase as the quantity of time units S increases. In other words, when a same quantity of time units S needs to be scheduled, and when the quantity of S is large, a message size of the scheduling information provided in embodiments of this application is less than message sizes of the scheduling IEs in the conventional technology 1 and the conventional technology 2. Therefore, air interface resource overheads required for transmitting the scheduling information can be effectively reduced, and air interface time required for transmitting the scheduling information can be reduced.

With reference to examples, the following further compares the signaling overheads of the scheduling information provided in embodiments of this application, the signaling overheads of the scheduling IE in the conventional technology 1, and the signaling overheads of the scheduling IE in the conventional technology 2.

FIG. 15 is a diagram of a time sequence of a multi-millisecond transmission (multi-millisecond, MMS) ranging process according to an embodiment of this application. FIG. 15 separately shows time units used by an initiator, a responder 1, and a responder 2 to transmit UWB signals in a ranging process. It is assumed that there are three devices that currently participate in the MMS ranging process, namely, one initiator end device and two responder devices. A sequence number above the diagram of the time sequence in FIG. 15 indicates a time sequence subscript. If a time unit is scheduled and allocated to transmit the UWB signal, the corresponding time unit is set to gray. On the contrary, if a time unit is not scheduled and allocated to transmit the UWB signal, the corresponding time unit is set to white.

It can be learned from FIG. 15 that a period between two adjacent times of transmission of any device is four time units, that is, after one time of UWB transmission, next time of transmission needs to be performed after four time units. For example, in FIG. 15, the initiator (initiator) transmits the UWB signal in time units such as the time unit 1, the time unit 5, and the time unit 9, and there are four time units between adjacent UWB signals. It is assumed that values 0 to 15 of the second field (Period Index field) in the scheduling information respectively correspond to 0, 1, 2, 4, 8, 16, 32, 64, 128, 256, 512, 1,024, 2,048, 4,096, 8,192, and 16,384 time units. In this case, that period index is equal to 3 indicates that the period is four time units.

In addition, it can be learned from FIG. 15 that a quantity of transmission times of any UWB device is 8, that is, a quantity of repetitions of UWB transmission is 8. It is assumed that values 0 to 15 of the third field (Repetition Index field) in the scheduling information respectively correspond to 1 to 16 times of repeated transmission. In this case, that period index is equal to 7 indicates that the quantity of times of repeated transmission is 8.

In addition, it can be learned from FIG. 15 that a start time unit for transmitting the UWB signal by the initiator is the time unit 1, a start time unit for transmitting the UWB signal by the responder 1 is the time unit 2, and a start time unit for transmitting the UWB signal by the responder 2 is the time unit 3.

It is assumed that all the devices shown in FIG. 15 are short address devices, that is, a length of an address of each device is 2 bytes.

It is assumed that the address of the initiator shown in FIG. 15 is an address 0, the address of the responder 1 is an address 1, and the address of the responder 2 is an address 2.

Correspondingly, it can be learned from the descriptions of Table 10 that, for the MMS ranging process shown in FIG. 15, the control field in the scheduling information provided in embodiments of this application should have configurations shown in Table 18 below.

Table 18

| Bits: 0 | 1- 6 | 7 |
|---|---|---|
| 0 | 2 (A value of the field starts from 0, and therefore, the value 2 indicates that a quantity of elements in the scheduling list list field is 3) | 1 |

In Table 18, the bit 7 is a value of a period mode field. If the value of the period mode field is 1, the period mode field indicates (or triggers) the periodic transmission mode, and the scheduling information includes field scheduling information related to transmission periodicity. If the value of the period mode field is 0, the period mode field indicates (or triggers) another transmission mode, and the scheduling information does not include a field related to the transmission periodicity.

Further, the scheduling list field in the scheduling information provided in embodiments of this application is shown in Table 19 below.

Table 19

| Bits: 0-6 | 7-10 | 11-15 | 2 octets or 8 octets |
|---|---|---|---|
| 1 | 3 (four time units between adjacent UWB signals) | 7 | Address 0 (address of an initiator) |

(continued)

| 2 | 3 | 7 | Address 1 (address of a responder 1) |
| 3 | 3 | 7 | Address 2 (address of a responder 2) |

Correspondingly, it can be learned from FIG. 15 that S is equal to 32 and N is equal to 3. S indicates the quantity of time units, and N indicates the quantity of devices. Therefore, in the case shown in FIG. 15, comparison between message consumption sizes of scheduling information is shown in Table 20 below.

Table 20

| | Short address device (unit: byte) | Extended address device (unit: byte) |
| --- | --- | --- |
| Message size of an RDM IE in the conventional technology 1 | 289 | 865 |
| Message size of a bitmap-based IE in the conventional technology 2 | 22 | 40 |
| Message size of scheduling information in this application | 13 | 31 |

The scheduling information in this application in Table 20 may be the scheduling information including the scheduling list field in Example 1 and the control field in Example 5, or may be the scheduling information including the scheduling list field in Example 2 and the control field in Example 5. It can be learned from Table 20 that, compared with those in the conventional technology 1 and the conventional technology 2, the scheduling information provided in this application can significantly reduce message size overheads.

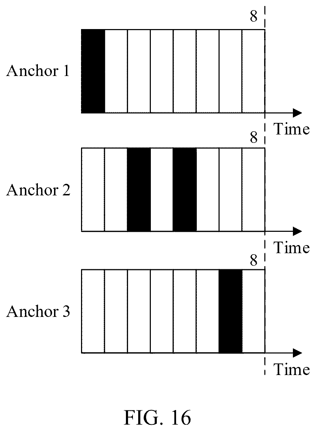

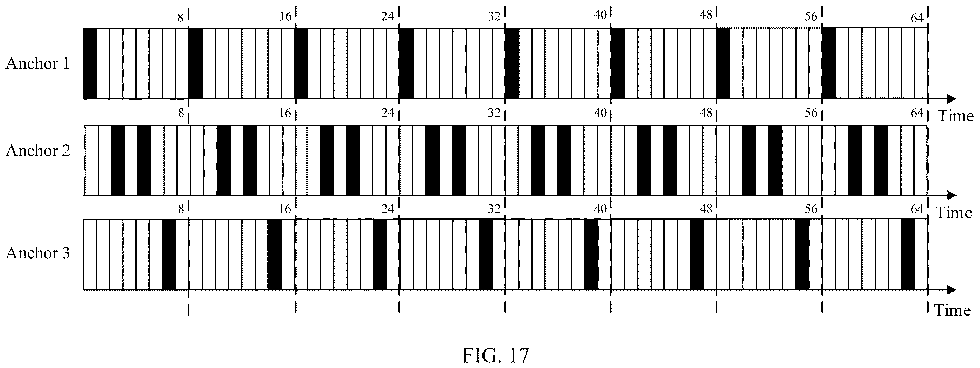

FIG. 16 shows a group of typical scheduling modes in which a DL-TDOA positioning process can be completed. In this group of scheduling modes, three anchor devices (anchor), namely, an anchor 1, an anchor 2, and an anchor 3 in FIG. 16, transmit UWB signals in the scheduling manner shown in FIG. 16 to perform DL-TDOA positioning. It is assumed that the DL-TDOA scheduling mode shown in FIG. 16 needs to be repeated for eight times, and there is no interval between two adjacent DL-TDOA positioning processes. In this case, a scheduling case is shown in FIG. 17. FIG. 17 is a diagram of scheduling of DL-TDOA positioning that is repeated for eight times according to an embodiment of this application. In FIG. 16 and FIG. 17, each rectangle indicates one time unit, a time unit indicated by a gray rectangle is scheduled and allocated to transmit the UWB signal, and a time unit indicated by a white rectangle is not scheduled and allocated to transmit the UWB signal. Because one complete DL-TDOA process is completed in 8 time units, there is no interval between two adjacent DL-TDOA processes shown in FIG. 17.

For the scheduling case shown in FIG. 17, that period mode is equal to 1 needs to be enabled in this case, so that a period index field (second field) and a repetition index field (third field) can be used to effectively compress signaling overheads of the scheduling information in the case shown in FIG. 17. It is assumed that the period index field may indicate a period value like 0, 1, 4, 8, 16, or 32 time units, and the repetition index field may indicate 1 to 16 repetitions. In this case, the period index field is set to 0 (indicating that there is no interval between two adjacent times of DL-TDOA measurement, and next measurement starts immediately after previous measurement is completed), and the repetition index field is set to 7 (indicating eight repetitions since a subscript starts from 0), so that a scheduling indication of the case in FIG. 17 can be implemented. It is assumed that the period index field may indicate a period value like 0, 1, 4, 8, 16, or 32 time units, and the repetition index field may indicate 1 to 16 repetitions. In this case, the period index field is set to 8 (indicating that a scheduling period is 8 time units), and the repetition index field is set to 7 (indicating eight repetitions since a subscript starts from 0), so that a scheduling indication of the case in FIG. 17 can be implemented.

Correspondingly, it can be learned from FIG. 17 that S is equal to 64 and N is equal to 3. Therefore, in the case shown in FIG. 17, comparison between signaling consumption of scheduling information is shown in Table 21 below.

Table 21

| | Short address device (unit: byte) | Extended address device (unit: byte) |
| --- | --- | --- |
| Message size of an RDM IE in the conventional technology 1 | $1 + 3_* 64_* 3 = 577$ | $1 + 9_* 64_* 3 = 1729$ |
| Message size of a bitmap-based IE in the conventional technology 2 | 1+11*3=34 | 1+17*3=52 |
| Message size of scheduling information in this application | 1+5*3=16 | 1+11*3=34 |

The scheduling information in this application in Table 21 may be the scheduling information including the scheduling list field in Example 3 and the control field in Example 5, or may be the scheduling information including the scheduling list field in Example 4 and the control field in Example 5. It can be learned from Table 21 that, compared with those in the conventional technology 1 and the conventional technology 2, the scheduling information provided in this application can significantly reduce message size overheads.

It should be noted that the scheduling information (referred to as a newly designed scheduling IE below) provided in embodiments of this application may be identified and processed by a device (anchor or tag) that needs to perform a ranging or sensing function. In a possible implementation, a corresponding method for identifying and processing the newly designed scheduling IE is similar to a method for identifying and processing a nested IE (for example, an RDM IE) stipulated in the existing protocol 802.15.4z. For details, refer to the method for identifying and processing the nested IE in the existing protocol 802.15.4z. For example, a protocol upper layer of a transmit end device configures a scheduling IE, and transfers the scheduling IE to a medium access control (medium access control, MAC) layer of the transmit end device. For another example, a MAC layer of a receive end device transfers a received scheduling IE to a upper protocol layer of the receive end device, and the protocol upper layer performs identification processing on the scheduling IE.

In a possible implementation, the newly designed scheduling IE may be transferred on a narrow-band frequency band.

In another possible implementation, the newly designed scheduling IE may alternatively be transferred on a UWB frequency band.

For ease of understanding, the following describes the newly designed scheduling IE in detail with reference to Table 22.

Table 22 below is an expansion and extension of Table 7 to Table 18 (Table 7 to Table 18) in the existing 802.15.4z protocol. For brevity, an existing definition in Table 7 to Table 18 in the protocol is not reflected in Table 22 below. Specifically, it can be seen from Table 22 below that the newly designed scheduling IE may be added to a nested IE list defined in Table 7 to Table 18 (Table 7 to Table 18) in the existing 802.15.4z protocol, and used as a newly added IE in the 802.15.4ab protocol or a later version protocol. Specifically, a reserved sub-ID value (Sub-ID value) in the nested IE list defined in Table 7 to Table 18 (Table 7 to Table 18) in the existing 802.15.4z protocol may indicate the newly designed scheduling IE.

Table 22

| Sub-ID value | IE Name | Data | Used by | Created by |
|---|---|---|---|---|
| T | (Newly added scheduling IE) | X | Upper Layer | Upper Layer |

T in Table 22 may be any one or more values in 0x5d to 0x7f. Table 22 may be an expansion and extension of the nested IE list defined in Table 7 to Table 18 (Table 7 to Table 18) in the existing 802.15.4z protocol. X in Table 22 indicates that the newly designed scheduling IE is an IE of a data type.

The following describes, with reference to the accompanying drawings, structures of communication apparatuses that can implement the scheduling methods provided in embodiments of this application.

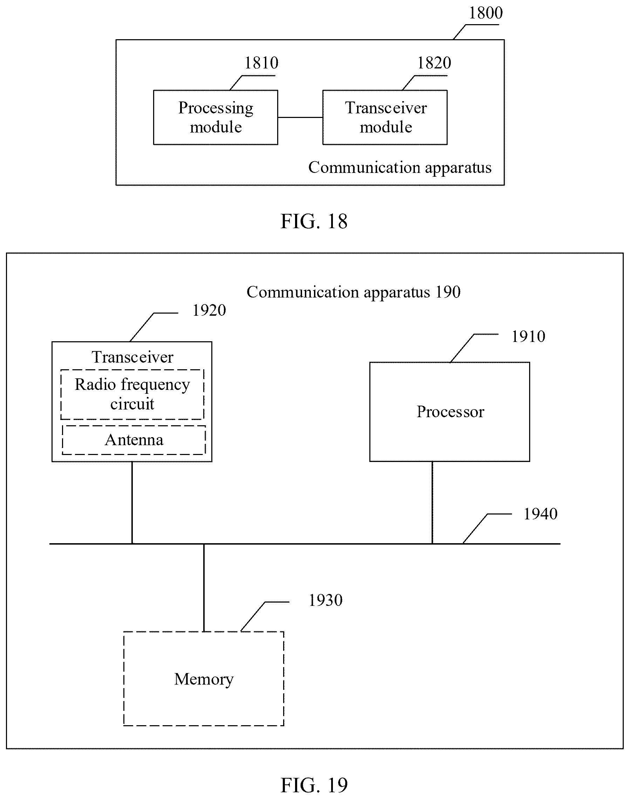

FIG. 18 is a diagram of a structure of a communication apparatus 1800 according to an embodiment of this application. The communication apparatus 1800 may correspondingly implement functions or steps implemented by the transmit end in the foregoing method embodiments, or may correspondingly implement functions or steps implemented by the receive end in the foregoing method embodiments. The communication apparatus 1800 may include a processing module 1810 and a transceiver module 1820. In a possible implementation, the apparatus may further include a storage unit. The storage unit may be configured to store instructions (code or a program) and/or data. The processing module 1810 and the transceiver module 1820 may be coupled to the storage unit. For example, the processing module 1810 may read the instructions (code or program) and/or the data in the storage unit, to implement a corresponding method. The foregoing units may be independently disposed, or may be partially or completely integrated. For example, the transceiver module 1820 may include a sending module and a receiving module. The sending module may be a transmitter, and the receiving module may be a receiver. An entity corresponding to the transceiver module 1820 may be a transceiver, or may be a communication interface.

In some possible implementations, the communication apparatus 1800 can correspondingly implement behavior and functions of the transmit end in the foregoing method embodiments. For example, the communication apparatus 1800 may be the transmit end, or may be a component (for example, a chip or a circuit) used in the transmit end. The transceiver module 1820 may be configured to perform, for example, all receiving or sending operations performed by the transmit end in the embodiments in FIG. 6 and FIG. 7, for example, step 602 in the embodiment shown in FIG. 6, and step 701 and step 702 in the embodiment shown in FIG. 7, and/or is configured to support another process of the technology described in this specification. The processing module 1810 is configured to perform all operations, other than the sending and receiving operations, performed by the transmit end in the embodiments in FIG. 6 and FIG. 7, for example, step 601 in the embodiment shown in FIG. 6.

In some possible implementations, the communication apparatus 1800 can correspondingly implement behavior and functions of the receive end in the foregoing method embodiments. For example, the communication apparatus 1800 may be the receive end, or may be a component (for example, a chip or a circuit) used in the receive end. The transceiver module 1820 may be configured to perform, for example, all receiving or sending operations performed by the receive end in the embodiments in FIG. 6 and FIG. 7, for example, step 602 in the embodiment shown in FIG. 6, and step 701 and step 702 in the embodiment shown in FIG. 7, and/or is configured to support another process of the technology described in this specification. The processing module 1810 is configured to perform all operations, other than the sending and receiving operations, performed by the receive end, for example, step 603 in the embodiment shown in FIG. 6, and step 703 in the embodiment shown in FIG. 7.

FIG. 19 is a diagram of a structure of another communication apparatus 190 according to an embodiment of this application. The communication apparatus in FIG. 19 may be the transmit end, or may be the receive end.

As shown in FIG. 19, the communication apparatus 190 includes at least one processor 1910 and a transceiver 1920.

In some embodiments of this application, the processor 1910 and the transceiver 1920 may be configured to perform functions, operations, or the like performed by the transmit end. The transceiver 1920 performs, for example, all receiving or sending operations performed by the transmit end in the embodiments in FIG. 6 and FIG. 7. The processor 1910 is configured to perform, for example, all operations other than the sending and receiving operations performed by the transmit end in the embodiments in FIG. 6 and FIG. 7.

In some embodiments of this application, the processor 1910 and the transceiver 1920 may be configured to perform functions, operations, or the like performed by the receive end. The transceiver 1920 performs, for example, all receiving or sending operations performed by the receive end in the embodiments in FIG. 6 and FIG. 7. The processor 1910 is configured to perform all operations other than the sending and receiving operations performed by the receive end.

The transceiver 1920 is configured to communicate with another device/apparatus through a transmission medium. The processor 1910 receives and sends data and/or signaling via the transceiver 1920, and is configured to implement the method in the foregoing method embodiments. The processor 1910 may implement functions of the processing module 1810, and the transceiver 1920 may implement functions of the transceiver module 1820.

Optionally, the transceiver 1920 may include a radio frequency circuit and an antenna. The radio frequency circuit is mainly configured to: perform conversion between a baseband signal and a radio frequency signal, and process the radio frequency signal. The antenna is mainly configured to receive and send a radio frequency signal in a form of an electromagnetic wave. An input/output apparatus like a touchscreen, a display, or a keyboard is mainly configured to: receive data input by a user and output data to the user.

Optionally, the communication apparatus 190 may further include at least one memory 1930, configured to store program instructions and/or data. The memory 1930 is coupled to the processor 1910. The coupling in this embodiment of this application may be an indirect coupling or a communication connection between apparatuses, units, or modules in an electrical form, a mechanical form, or another form, and is used for information exchange between the apparatuses, the units, or the modules. The processor 1910 may cooperate with the memory 1930. The processor 1910 may execute the program instructions stored in the memory 1930. At least one of the at least one memory may be included in the processor.

The processor 1910 may read a software program in the memory 1930, interpret and execute instructions of the software program, and process data of the software program. When data needs to be sent wirelessly, the processor 1910 performs baseband processing on the to-be-sent data, and then outputs a baseband signal to a radio frequency circuit. The radio frequency circuit performs radio frequency processing on the baseband signal, and then sends, through the antenna, a radio frequency signal in an electromagnetic wave form. When data is sent to the communication apparatus, the radio frequency circuit receives a radio frequency signal through the antenna, converts the radio frequency signal into a baseband signal, and outputs the baseband signal to the processor 1910. The processor 1910 converts the baseband signal into data, and processes the data.

In another implementation, the radio frequency circuit and the antenna may be disposed independent of the processor that performs baseband processing. For example, in a distributed scenario, the radio frequency circuit and the antenna may be remotely disposed independent of the communication apparatus.

In this embodiment of this application, a specific connection medium between the transceiver 1920, the processor 1910, and the memory 1930 is not limited. In this embodiment of this application, in FIG. 19, the memory 1930, the processor 1910, and the transceiver 1920 are connected to each other through a bus 1940. The bus is indicated by a thick line in FIG. 19. A manner of connection between other components is only schematically described, but is not used as a limitation. The bus may be classified into an address bus, a data bus, a control bus, and the like. For ease of indication, the bus is indicated by only one thick line in FIG. 19, but this does not indicate that there is only one bus or one type of bus.

In embodiments of this application, the processor may be a general-purpose processor, a digital signal processor, an application-specific integrated circuit, a field programmable gate array or another programmable logic device, a discrete gate or transistor logic device, or a discrete hardware component, and may implement or execute the methods, steps, and logical block diagrams disclosed in embodiments of this application. The general-purpose processor may be a microprocessor, any conventional processor, or the like. The steps of the method disclosed with reference to embodiments of this application may be directly performed by a hardware processor, or may be performed by a combination of hardware in the processor and a software module.

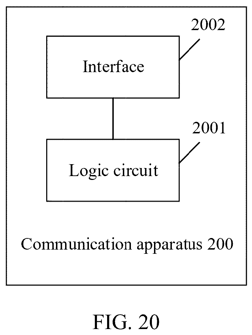

FIG. 20 is a diagram of a structure of another communication apparatus 200 according to an embodiment of this application. As shown in FIG. 20, the communication apparatus shown in FIG. 20 includes a logic circuit 2001 and an interface 2002. The processing module 1810 in FIG. 18 may be implemented by using the logic circuit 2001, and the transceiver module 1820 in FIG. 18 may be implemented by using the interface 2002. The logic circuit 2001 may be a chip, a processing circuit, an integrated circuit, a system on chip (system on chip, SoC), or the like. The interface 2002 may be a communication interface, an input/output interface, or the like. In this embodiment of this application, the logic circuit and the interface may be coupled to each other. A specific manner of connection between the logical circuit and the interface is not limited in this embodiment of this application.

In some embodiments of this application, the logic circuit and the interface may be configured to perform functions, operations, or the like performed by the transmit end.

In some embodiments of this application, the logic circuit and the interface may be configured to perform functions, operations, or the like performed by the receive end.

This application further provides a computer-readable storage medium. The computer-readable storage medium stores a computer program or instructions. When the computer program or the instructions are run on a computer, the computer is enabled to perform the method in the foregoing embodiments.

This application further provides a computer program product. The computer program product includes instructions or a computer program. When the instructions or the computer program is run on a computer, the method in the foregoing embodiments is performed.

This application further provides a communication system, including the transmit end and the receive end.

This application further provides a chip. The chip includes a communication interface and a processor. The communication interface is configured to receive and send a signal of the chip. The processor is configured to execute computer program instructions, so that a communication apparatus including the chip performs the method in the foregoing embodiments.

All or some of the foregoing embodiments may be implemented by software, hardware, firmware, or any combination thereof. When software is used to implement embodiments, all or some embodiments may be implemented in a form of a computer program product. The computer program product includes one or more computer programs or instructions. When the computer programs or instructions are loaded and executed on a computer, the procedures or the functions described in embodiments of this application are all or partially performed. The computer may be a general-purpose computer, a dedicated computer, a computer network, a network device, user equipment, or another programmable apparatus. The computer programs or the instructions may be stored in the computer-readable storage medium, or may be transmitted from a computer-readable storage medium to another computer-readable storage medium. For example, the computer programs or the instructions may be transmitted from a website, computer, server, or data center to another website, computer, server, or data center in a wired or wireless manner. The computer-readable storage medium may be any usable medium accessible by the computer, or a data storage device, for example, a server or a data center, integrating one or more usable media. The usable medium may be a magnetic medium, for example, a floppy disk, a hard disk, or a magnetic tape, may be an optical medium, for example, a digital video disc, or may be a semiconductor medium, for example, a solid-state drive. The computer-readable storage medium may be a volatile or non-volatile storage medium, or may include both the volatile storage medium and the non-volatile storage medium.

In embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

## Claims

1. A scheduling method for an ultra-wideband UWB, comprising:

   generating scheduling information, wherein the scheduling information comprises a first field and a second field, the first field indicates a time unit in which a UWB device transmits a UWB signal, and the second field indicates a scheduling period in which the UWB device transmits the UWB signal; and
   sending the scheduling information.

2. The method according to claim 1, wherein the scheduling information further comprises a third field, and the third field indicates a quantity of repetitions of transmitting the UWB signal by the UWB device.

3. The method according to claim 1 or 2, wherein the scheduling information further comprises a fourth field, and the fourth field indicates the UWB device to periodically transmit the UWB signal.

4. The method according to any one of claims 1 to 3, wherein the scheduling information further comprises an address of the UWB device, and a length of the address of the UWB device is 2 bytes or 8 bytes.

5. The method according to any one of claims 1 to 4, wherein the time unit is a time unit for transmitting the UWB signal in a $1^{st}$ scheduling period.

6. The method according to any one of claims 1 to 5, wherein
the first field is a time unit bitmap, the time unit bitmap indicates whether a time unit is used by the UWB device to transmit the UWB signal, the scheduling information further comprises a bitmap offset, the bitmap offset is used to determine a start time unit that is in one measurement period and in which the UWB device transmits the UWB signal, and a time unit corresponding to a $1^{st}$ bit of the time unit bitmap is the start time unit.

7. The method according to claim 6, wherein the scheduling information further comprises a field indicating a length of the time unit bitmap.

8. The method according to claim 6 or 7, wherein a value of the bitmap offset is a quantity of time units before the start time unit in the one measurement period.

9. The method according to any one of claims 6 to 8, wherein the time unit bitmap comprises K bits, K is an integer greater than 0, and when one of the K bits is set to a specified value, the specified value indicates that a time unit corresponding to the bit is used by the UWB device to transmit the UWB signal.

10. The method according to any one of claims 1 to 9, wherein the scheduling information further comprises a fifth field, the fifth field indicates an address type of the UWB device, and the address type of the UWB device comprises a short address and an extended address.

11. The method according to claim 10, wherein the scheduling information further comprises a sixth field and a scheduling list, the sixth field indicates a quantity of list elements in the scheduling list, one list element in the scheduling list is used to schedule one UWB device, and the first field and the second field correspond to one list element in the scheduling list.

12. The method according to any one of claims 1 to 11, wherein the time unit is either a slot or a ranging scheduling time unit RSTU.

13. The method according to any one of claims 1 to 12, wherein the method is applied to a ranging, sensing, or positioning scenario.

14. A scheduling method for a UWB, comprising:

receiving first scheduling information, wherein the first scheduling information comprises a first field and a second field, the first field indicates a time unit in which a UWB device transmits a UWB signal, and the second field indicates a scheduling period in which the UWB device transmits the UWB signal; and
transmitting the UWB signal based on the first scheduling information.

15. The method according to claim 14, wherein the first scheduling information further comprises a third field, and the third field indicates a quantity of repetitions of transmitting the UWB signal by the UWB device.

16. The method according to claim 14 or 15, wherein the first scheduling information further comprises a fourth field, and the fourth field indicates the UWB device to periodically transmit the UWB signal.

17. The method according to any one of claims 14 to 16, wherein the first scheduling information further comprises an address of the UWB device, and a length of the address of the UWB device is 2 bytes or 8 bytes.

**18.** The method according to any one of claims 14 to 17, wherein the time unit is a time unit for transmitting the UWB signal in a 1st scheduling period.

**19.** The method according to any one of claims 14 to 18, wherein the first field is a time unit bitmap, the time unit bitmap indicates whether a time unit is used by the UWB device to transmit the UWB signal, the first scheduling information further comprises a bitmap offset, the bitmap offset is used to determine a start time unit that is in one measurement period and in which the UWB device transmits the UWB signal, and a time unit corresponding to a 1st bit of the time unit bitmap is the start time unit.

**20.** The method according to claim 19, wherein the first field further comprises a field indicating a length of the time unit bitmap.

**21.** The method according to claim 18 or 19, wherein a value of the bitmap offset is a quantity of time units before the start time unit in the one measurement period.

**22.** The method according to any one of claims 19 to 21, wherein the time unit bitmap comprises K bits, K is an integer greater than 0, and when one of the K bits is set to a specified value, the specified value indicates that a time unit corresponding to the bit is used by the UWB device to transmit the UWB signal.

**23.** The method according to any one of claims 14 to 22, wherein the first scheduling information further comprises a fifth field, the fifth field indicates an address type of the UWB device, and the address type of the UWB device comprises a short address and an extended address.

**24.** The method according to claim 23, wherein the first scheduling information further comprises a sixth field and a scheduling list, the sixth field indicates a quantity of list elements in the scheduling list, one list element in the scheduling list is used to schedule one UWB device, and the first field and the second field correspond to one list element in the scheduling list.

**25.** The method according to any one of claims 14 to 24, wherein the time unit is either a slot or a ranging scheduling time unit RSTU.

**26.** The method according to any one of claims 14 to 25, wherein the method is applied to a ranging, sensing, or positioning scenario.

**27.** The method according to any one of claims 14 to 26, wherein the method further comprises:

receiving second scheduling information, wherein a format of the second scheduling information is different from a format of the first scheduling information; and
the transmitting the UWB signal based on the first scheduling information comprises:
transmitting the UWB signal based on a sequence of receiving the first scheduling information and the second scheduling information, and the first scheduling information.

**28.** A communication apparatus, comprising a module or a unit configured to implement the method according to any one of claims 1 to 13.

**29.** A communication apparatus, comprising a module or a unit configured to implement the method according to any one of claims 14 to 27.

**30.** A computer-readable storage medium, wherein the computer-readable storage medium stores a computer program, the computer program comprises program instructions, and when the program instructions are executed, a computer is enabled to perform the method according to any one of claims 1 to 27.

**31.** A communication apparatus, comprising a processor, wherein the processor is coupled to a memory, the memory stores computer program instructions, and the processor is configured to execute the computer program instructions, so that the communication apparatus performs the method according to any one of claims 1 to 27.

**32.** A chip, comprising:

a communication interface, configured to receive and send a signal of the chip; and
a processor, configured to execute computer program instructions, so that a communication apparatus comprising the chip performs the method according to any one of claims 1 to 27.

FIG. 1

UWB positioning/ranging signal

Anchor

Anchor

A

B

Tag device

C

Anchor

FIG. 2

PAN coordinator or coordinator

Information flow

FFD

RFD

FIG. 3

**PAN coordinator or coordinator**

Information flow

FFD

RFD

FIG. 4

Anchor

Tag 1                    Tag 2

FIG. 5

| Transmit end | | Receive end |
|---|---|---|

601

Generate scheduling information

Scheduling information          602

603

Transmit a UWB signal based on the
scheduling information

FIG. 6

FIG. 7

FIG. 8

| List element: | First field (time unit index field) | Second field (period index field) | Third field (repetition index field) | Address 1 |
|---|---|---|---|---|

FIG. 9A

| List element: | First field (time unit index field) | Second field (period index field) | Address 1 |
|---|---|---|---|

FIG. 9B

FIG. 10

FIG. 11A

FIG. 11B

| List element: | First field (time unit index field) | Second field (period index field) | Third field (repetition index field) | Bitmap offset | Address 1 |
|---|---|---|---|---|---|

FIG. 12A

| List element: | Bitmap offset | First field (time unit index field) | Address 1 | Second field (period index field) | Third field (repetition index field) |
|---|---|---|---|---|---|

FIG. 12B

0   1   2   3   4   5   6   7   8   9   10  11  12  13  14  15

Time

FIG. 13

0   1   2   3   4   5   6   7

Time

FIG. 14

0 1 2 3 4 5 6 7 8 9 ...

Initiator

Time

0 1 2 3 4 5 6 7 8 9 ...

Responder 1

Time

0 1 2 3 4 5 6 7 8 9 ...

Responder 2

Time

FIG. 15

FIG. 16

FIG. 17

EP 4 598 201 A1

1800

1810                    1820

Processing          Transceiver
module              module

Communication apparatus

FIG. 18

Communication apparatus 190

1920                                    1910

Transceiver

Radio frequency
circuit

Processor

Antenna

1940

1930

Memory

FIG. 19

FIG. 20

# INTERNATIONAL SEARCH REPORT

| | International application No. |
|---|---|
| | **PCT/CN2023/119113** |

**A. CLASSIFICATION OF SUBJECT MATTER**

H04W 72/12(2023.01)i

According to International Patent Classification (IPC) or to both national classification and IPC

**B. FIELDS SEARCHED**

Minimum documentation searched (classification system followed by classification symbols)

IPC: H04W G01S

Documentation searched other than minimum documentation to the extent that such documents are included in the fields searched

Electronic data base consulted during the international search (name of data base and, where practicable, search terms used)

CNTXT, ENTXT, ENTXTC, WPABS, WPABSC, IEEE: 超宽带, 超宽带设备, 时间单元, 调度, 开销, 信令, 周期, 字段, 第一, 第二, UWB, ultra wideband, time unit, schedul+, overhead, signal, period, field, first, second

**C. DOCUMENTS CONSIDERED TO BE RELEVANT**

| Category* | Citation of document, with indication, where appropriate, of the relevant passages | Relevant to claim No. |
|---|---|---|
| X | CN 113302517 A (SAMSUNG ELECTRONICS CO., LTD.) 24 August 2021 (2021-08-24) description, paragraphs [0119]-[0336] | 1-32 |
| A | TW 202236891 A (QUALCOMM INC.) 16 September 2022 (2022-09-16) entire document | 1-32 |
| A | US 2022137177 A1 (APPLE INC.) 05 May 2022 (2022-05-05) entire document | 1-32 |
| A | DARIF, Anouar et al. "A Study with Simulation of Power Consumption and Latency for MAC Protocols in WSN Based on IR-UWB Transceiver" *2014 Second World Conference on Complex Systems (WCCS),* 31 December 2014 (2014-12-31), entire document | 1-32 |

☐ Further documents are listed in the continuation of Box C. ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **01 November 2023** | **15 November 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/119113**

| Patent document cited in search report | | | Publication date (day/month/year) | Patent family member(s) | | | Publication date (day/month/year) |
|---|---|---|---|---|---|---|---|
| CN | 113302517 | A | 24 August 2021 | EP | 3894891 | A1 | 20 October 2021 |
| | | | | WO | 2020145741 | A1 | 16 July 2020 |
| | | | | KR | 20210121004 | A | 07 October 2021 |
| | | | | US | 2020229068 | A1 | 16 July 2020 |
| TW | 202236891 | A | 16 September 2022 | WO | 2022169619 | A1 | 11 August 2022 |
| | | | | CN | 116848900 | A | 03 October 2023 |
| US | 2022137177 | A1 | 05 May 2022 | CN | 114449660 | A | 06 May 2022 |
| | | | | CN | 115706656 | A | 17 February 2023 |
| | | | | CN | 115706657 | A | 17 February 2023 |
| | | | | CN | 115706920 | A | 17 February 2023 |
| | | | | EP | 4130791 | A1 | 08 February 2023 |
| | | | | EP | 4131807 | A1 | 08 February 2023 |
| | | | | KR | 20230020928 | A | 13 February 2023 |

Form PCT/ISA/210 (patent family annex) (July 2022)

**REFERENCES CITED IN THE DESCRIPTION**

**Patent documents cited in the description**

- CN 202211275259